# EUROPEAN PATENT APPLICATION

(11) **EP 1 126 646 A2**
(43) Date of publication of application: **22.08.2001**
(21) Application number: 00121729.8
(22) Date of filing: 05.10.2000
(51) Int. Cl.: H04J 3/16, H04J 3/17

(54) **Digital multiplixer**

(30) Priority: 14.02.2000 JP 2000035768
(71) Applicant: MITSUBISHI DENKI KABUSHIKI KAISHA, Tokyo 100-8310 (JP)
(72) Inventor: Fushimi, Wataru, Mitsubishi Denki Kabushiki Kaisha, Tokyo 100-8310 (JP); Naito, Yushi, Mitsubishi Denki Kabushiki Kaisha, Tokyo 100-8310 (JP)
(74) Representative: Pfenning, Meinig & Partner

(57) **Abstract**

DCME (Digital Circuit Multiplying Equipment) includes speech encoders (101), FAX demodulators (102), a multiplexer (103) and an IP (Internet Protocol) packet assembler 104. The multiplexer, receiving VBD (Voice-Band Data) signals other than speech signals from the speech encoders, and facsimile signals from the FAX demodulators, assigns the VBD signals and facsimile signals to a bearer frame with lowering their priority, and transmits unassignable VBD signals and facsimile signals to an IP network via the IP packet assembler. This makes it possible to implement highly efficient transmission of the speech signals over the bearer line with maintaining speech in high quality.

## Description

### BACKGROUND OF THE INVENTION

### Field of the Invention

The present invention relates to digital circuit multiplication equipment (DCME) for multiplexing speech and facsimile signals using low bit rate speech coding technique and silence elimination technique, thereby implementing highly efficient transmission.

### Description of Related Art

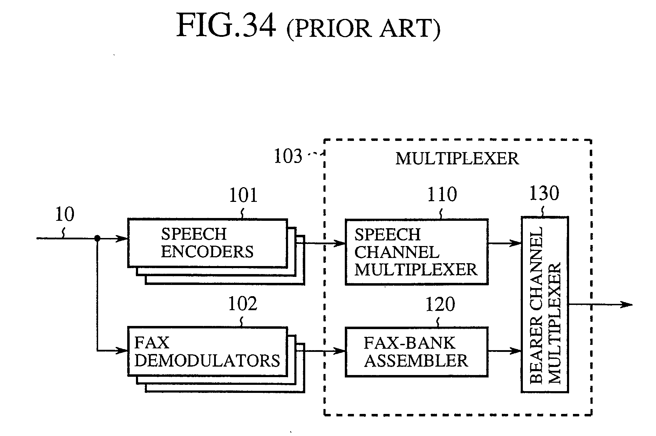

Fig. 34 is a block diagram showing a configuration of conventional DCME. In Fig. 34, the reference numeral 10 designates a signal line; 101 designates speech encoders for coding speech and voice-band-data signals (VBD signals); 102 designates FAX demodulators for demodulating facsimile signals; and 103 designates a multiplexer for multiplexing data streams. In the multiplexer 103, the reference numeral 110 designates a speech channel multiplexer for multiplexing data streams output from the speech encoders 101; 120 designates a FAX-BANK assembler for assembling a FAX-BANK by multiplexing the data streams output from the FAX demodulators 102; and 130 designates a bearer channel multiplexer for multiplexing the data streams output from the speech channel multiplexer 110 and from the FAX-BANK assembler 120, and supplies the multiplexed data stream to a bearer line.

Here, the term "FAX-BANK" refers to a data stream assembled from the data streams of the facsimile signals for transmitting through the bearer line the facsimile signals multiplexed with the speech signals.

Next, the operation of the conventional DCME will be described.

The speech signals and facsimile signals input via the signal line 10 undergo signal processings by the speech encoders 101 and FAX demodulators 102 to be converted into digital data streams. The data streams are multiplexed and assembled into respective data streams by the speech channel multiplexer 110 and FAX-BANK assembler 120. The speech channel multiplexer 110 assembles the data stream by selecting speech activities first. The bearer channel multiplexer 130 multiplexes the data streams from the speech channel multiplexer 110 and from the FAX-BANK assembler 120 onto the bearer line to be transferred to far end equipment.

With the foregoing configuration, the conventional DCME has a problem of inefficient transmission for the VBD signals such as facsimile signals and modem signals other than speech signals, which brings about degradation in speech quality as well. This is because it is difficult for the conventional DCME to achieve effective statistical multiplication effect using the silence elimination technique for the VBD signals, and to economize transmission capacity because of the difficulty of applying the low bit rate speech coding technique to the VBD signals.

### SUMMARY OF THE INVENTION

The present invention is implemented to solve the foregoing problem. It is therefore an object of the present invention to provide DCME capable of implementing highly efficient speech signal transmission in high quality of the VBD signals such as facsimile signals and modem signals which can bring about degradation in transmission efficiency and speech quality in the conventional system. This can be implemented by transmitting the VBD signals through an IP (Internet Protocol) network rather than through a bearer line.

According to an aspect of the present invention, there is provided digital circuit multiplication equipment (DCME) comprising: a speech signal processor for performing signal processings of input speech signals; a FAX demodulation transmission processor for performing demodulation transmission processings of input facsimile signals; multiplexing means for multiplexing part of received signals from the speech signal processor and from the FAX demodulation transmission processor, for supplying a multiplexed signal to a bearer line, and for outputting remaining part of the received signals; and an IP packet assembler for packetizing the remaining part of the received signals supplied from the multiplexing means into IP packets to be output to an IP network.

Here, the multiplexing means may comprise: a speech channel multiplexer for multiplexing outputs from the speech signal processor; and a bearer channel multiplexer for multiplexing signals from the speech channel multiplexer, and for supplying a multiplexed signal to the bearer line, wherein the IP packet assembler may packetize signals output from the FAX demodulation transmission processor into IP packets to be output to the IP network.

The multiplexing means may comprise: a speech channel multiplexer for multiplexing outputs from the speech signal processor; a FAX-BANK assembler for assembling a FAX-BANK by multiplexing outputs from the FAX demodulation transmission processor; and a bearer channel multiplexer for multiplexing signals from the speech channel multiplexer, and for supplying a multiplexed signal to the bearer line, wherein the IP packet assembler may packetize the FAX-BANK output from the FAX-BANK assembler into IP packets to be output to the IP network.

The multiplexing means may comprise: a speech channel multiplexer for multiplexing outputs from the speech signal processor; a selector for distributing signals supplied from the FAX demodulation transmission processor; a first FAX-BANK assembler for assembling a FAX-BANK by multiplexing a first portion of the signals distributed by the selector; a second FAX-BANK assembler for assembling a FAX-BANK by multiplexing a second portion of the signals distributed by the selector; a bearer channel multiplexer for multiplexing a signal output from the speech channel multiplexer with the FAX-BANK output from the first FAX-BANK assembler, and for supplying a multiplexed signal to the bearer line; equipment load monitoring means for monitoring an intra-equipment load state; and a selector controller for controlling the selector in response to at least one signal fed from the equipment load monitoring means, wherein the IP packet assembler may packetize the FAX-BANK output from the second FAX-BANK assembler into IP packets to be supplied to the IP network.

The multiplexing means may comprise: a speech channel multiplexer for multiplexing outputs of the speech signal processor; a FAX-BANK assembler for assembling a FAX-BANK by multiplexing outputs of the FAX demodulation transmission processor; a selector for distributing the FAX-BANK supplied from the FAX-BANK assembler; a bearer channel multiplexer for multiplexing a signal output from the speech channel multiplexer with a first portion of the FAX-BANK distributed by the selector, and for supplying a multiplexed signal to the bearer line; equipment load monitoring means for monitoring an intra-equipment load state; and a selector controller for controlling the selector in response to at least one signal fed from the equipment load monitoring means, wherein the IP packet assembler may packetize a second portion of the FAX-BANK distributed by the selector into IP packets to be supplied to the IP network.

The multiplexing means may comprise: a speech channel multiplexer for multiplexing outputs of the speech signal processor; a selector for distributing signals supplied from the FAX demodulation transmission processor; a FAX-BANK assembler for assembling a FAX-BANK by multiplexing a first portion of signals distributed by the selector; a bearer channel multiplexer for multiplexing a signal output from the speech channel multiplexer with the FAX-BANK output from the FAX-BANK assembler, and for supplying a multiplexed signal to the bearer line; equipment load monitoring means for monitoring an intra-equipment load state; and a selector controller for controlling the selector in response to a signal fed from the equipment load monitoring means, wherein the IP packet assembler may packetize a second portion of the signals distributed by the selector into IP packets to be supplied to the IP network.

The equipment load monitoring means may consist of one of a freeze-out fraction ratio monitor, a FAX-BANK traffic volume monitor, a FAX transmission rate monitor and an average coding rate monitor, wherein the freeze-out fraction ratio monitor monitors a freeze-out fraction ratio of the speech channel multiplexer, the FAX-BANK traffic volume monitor monitors a FAX-BANK traffic volume of one of the FAX-BANK assembler and first FAX-BANK assembler, the FAX transmission rate monitor monitors a FAX transmission rate of the FAX demodulation transmission processor, and the average coding rate monitor monitors an average coding rate of the speech signal processor.

The equipment load monitoring means may comprise at least two monitors selected from a group consisting of a freeze-out fraction ratio monitor, a FAX-BANK traffic volume monitor, a FAX transmission rate monitor and an average coding rate monitor, wherein the freeze-out fraction ratio monitor monitors a freeze-out fraction ratio of the speech channel multiplexer, the FAX-BANK traffic volume monitor monitors a FAX-BANK traffic volume of one of the FAX-BANK assembler and first FAX-BANK assembler, the FAX transmission rate monitor monitors a FAX transmission rate of the FAX demodulation transmission processor, and the average coding rate monitor monitors an average coding rate of the speech signal processor, and wherein the selector controller controls the selector in response to signals supplied from the at least two monitors.

The speech signal processor may comprise speech encoders for encoding input speech signals, and VBD encoders for encoding input VBD signals, wherein the multiplexing means may comprise a speech channel multiplexer for multiplexing signals supplied from the speech encoders, a FAX-BANK assembler for assembling a FAX-BANK by multiplexing signals supplied from the FAX demodulation transmission processor, and a bearer channel multiplexer for multiplexing a signal from the speech channel multiplexer with the FAX-BANK from the FAX-BANK assembler, and for supplying a multiplexed signal to the bearer line, and wherein the IP packet assembler may packetize signals from the VBD encoders into IP packets to be output to the IP network.

The speech channel multiplexer may comprise a multiplexer for speech channel for multiplexing signals supplied from the speech encoders, and a multiplexer for VBD channel for multiplexing signals supplied from the VBD encoders, wherein the IP packet assembler may packetize a signal output from the multiplexer for VBD channel into IP packets to be output to the IP network.

The multiplexing means may further comprise a selector for distributing signals output from the multiplexer for VBD channel, wherein the DCME may further comprise a CNG-CED tone detector for detecting one of a CNG signal and a CED signal in facsimile protocol, and a selector controller for controlling the selector in response to a signal supplied from the CNG-CED tone detector, wherein the bearer channel multiplexer may multiplex a signal output from the multiplexer for speech channel, a first portion of the signals distributed by the selector and the FAX-BANK output from the FAX-BANK assembler, and output a multiplexed signal to the bearer line, and wherein the packet assembler may packetize a second portion of the signals distributed by the selector into IP packets to be supplied to the IP network.

The multiplexing means may further comprise a selector for distributing signals output from the multiplexer for VBD channel, wherein the DCME may further comprise a FAX demodulation monitor for monitoring as to whether facsimile signals can be normally processed by the FAX demodulation transmission processor, and a selector controller for controlling the selector in response to a signal supplied from the FAX demodulation monitor, wherein the bearer channel multiplexer may multiplex a signal output from the multiplexer for speech channel, a first portion of signals distributed by the selector and the FAX-BANK output from the FAX-BANK assembler, and output a multiplexed signal to the bearer line, and wherein the packet assembler may packetize a second portion of signals distributed by the selector into IP packets to be supplied to the IP network.

The multiplexing means may further comprise a selector for distributing signals from the VBD encoders to the multiplexer for VBD channel and to the IP packet assembler, wherein the DCME may further comprise a CNG-CED tone detector for detecting one of a CNG signal and a CED signal in facsimile protocol, and a selector controller for controlling the selector in response to a signal supplied from the CNG-CED tone detector, wherein the bearer channel multiplexer may multiplex a signal output from the multiplexer for speech channel, a signal output from the multiplexer for VBD channel and the FAX-BANK output from the FAX-BANK assembler, and output a multiplexed signal to the bearer line, and wherein the packet assembler may packetize the signal distributed by the selector into IP packets to be supplied to the IP network.

The multiplexing means may further comprise a selector for distributing signals from the VBD encoders to the multiplexer for VBD channel and to the IP packet assembler, wherein the DCME may further comprise a FAX demodulation monitor for monitoring as to whether facsimile signals can be normally processed by the FAX demodulation transmission processor, and a selector controller for controlling the selector in response to a signal supplied from the FAX demodulation monitor, wherein the bearer channel multiplexer may multiplex a signal output from the multiplexer for speech channel, a signal output from the multiplexer for VBD channel and the FAX-BANK output from the FAX-BANK assembler, and output a multiplexed signal to the bearer line, and wherein the packet assembler may packetize the signal distributed by the selector into IP packets to be supplied to the IP network.

### BRIEF DESCRIPTION OF THE DRAWINGS

Fig. 1 is a block diagram showing a configuration of an embodiment 1 of the DCME in accordance with the present invention;
Fig. 2 is a block diagram showing a configuration of an embodiment 2 of the DCME in accordance with the present invention;
Fig. 3 is a block diagram showing a configuration of an embodiment 3 of the DCME in accordance with the present invention;
Fig. 4 is a block diagram showing a configuration of an embodiment 4 of the DCME in accordance with the present invention;
Fig. 5 is a block diagram showing a configuration of an embodiment 5 of the DCME in accordance with the present invention;
Fig. 6 is a block diagram showing a configuration of an embodiment 6 of the DCME in accordance with the present invention;
Fig. 7 is a block diagram showing a configuration of an embodiment 7 of the DCME in accordance with the present invention;
Fig. 8 is a block diagram showing a configuration of an embodiment 8 of the DCME in accordance with the present invention;
Fig. 9 is a block diagram showing a configuration of an embodiment 9 of the DCME in accordance with the present invention;
Fig. 10 is a block diagram showing a configuration of an embodiment 10 of the DCME in accordance with the present invention;
Fig. 11 is a block diagram showing a configuration of an embodiment 11 of the DCME in accordance with the present invention;
Fig. 12 is a block diagram showing a configuration of an embodiment 12 of the DCME in accordance with the present invention;
Fig. 13 is a block diagram showing a configuration of an embodiment 13 of the DCME in accordance with the present invention;
Fig. 14 is a block diagram showing a configuration of an embodiment 14 of the DCME in accordance with the present invention;
Fig. 15 is a block diagram showing a configuration of an embodiment 15 of the DCME in accordance with the present invention;
Fig. 16 is a block diagram showing a configuration of an embodiment 16 of the DCME in accordance with the present invention;
Fig. 17 is a block diagram showing a configuration of an embodiment 17 of the DCME in accordance with the present invention;
Fig. 18 is a block diagram showing a configuration of an embodiment 18 of the DCME in accordance with the present invention;
Fig. 19 is a block diagram showing a configuration of an embodiment 19 of the DCME in accordance with the present invention;
Fig. 20 is a block diagram showing a configuration of an embodiment 20 of the DCME in accordance with the present invention;
Fig. 21 is a block diagram showing a configuration of an embodiment 21 of the DCME in accordance with the present invention;
Fig. 22 is a block diagram showing a configuration of an embodiment 22 of the DCME in accordance with the present invention;
Fig. 23 is a block diagram showing a configuration of an embodiment 23 of the DCME in accordance with the present invention;
Fig. 24 is a block diagram showing a configuration of an embodiment 24 of the DCME in accordance with the present invention;
Fig. 25 is a block diagram showing a configuration of an embodiment 25 of the DCME in accordance with the present invention;
Fig. 26 is a block diagram showing a configuration of an embodiment 26 of the DCME in accordance with the present invention;
Fig. 27 is a block diagram showing a configuration of an embodiment 27 of the DCME in accordance with the present invention;
Fig. 28 is a block diagram showing a configuration of an embodiment 28 of the DCME in accordance with the present invention;
Fig. 29 is a block diagram showing a configuration of an embodiment 29 of the DCME in accordance with the present invention;
Fig. 30 is a block diagram showing a configuration of an embodiment 30 of the DCME in accordance with the present invention;
Fig. 31 is a block diagram showing a configuration of an embodiment 31 of the DCME in accordance with the present invention;
Fig. 32 is a block diagram showing a configuration of an embodiment 32 of the DCME in accordance with the present invention;
Fig. 33 is a block diagram showing a configuration of an embodiment 33 of the DCME in accordance with the present invention; and
Fig. 34 is a block diagram showing a configuration of conventional DCME.

### DETAILED DESCRIPTION OF THE PREFERRED EMBODIMENTS

The invention will now be described with reference to the accompanying drawings.

### EMBODIMENT 1

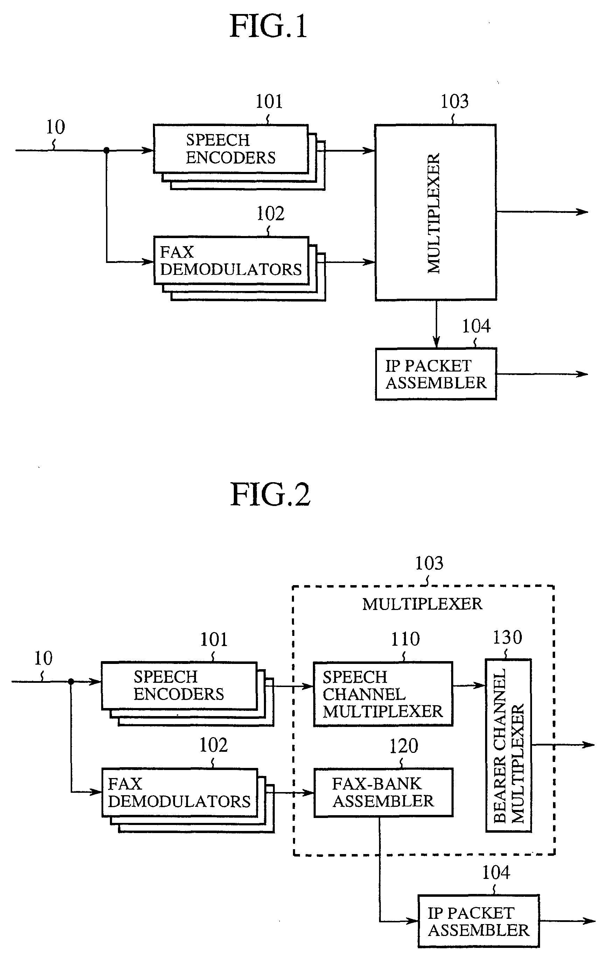

Fig. 1 is a block diagram showing a configuration of an embodiment 1 of the DCME in accordance with the present invention. In Fig. 1, the reference numeral 10 designates a signal line; 101 designates speech encoders (a speech signal processor) for coding speech signals and voice-band-data signals (called VBD signals from now on); 102 designates FAX demodulators (a FAX demodulation transmission processor) for demodulating and transmitting facsimile signals; 103 designates a multiplexer (multiplex means) for multiplexing data streams output from the speech encoders 101 and from the FAX demodulators 102, and supplying the multiplexed data stream to a bearer line; and 104 designates an IP packet assembler for packetizing the data streams from the multiplexer 103 into IP packets to be sent to an IP network. Here, the term "FAX-BANK" refers to a data stream assembled from data streams of the facsimile signals for transmitting through the bearer line the facsimile signals multiplexed with the speech signals, for example.

Next, the operation of the present embodiment 1 will be described.

The speech encoders 101 encode the speech signals and VBD signals input to the equipment, and supply the data streams to the multiplexer 103. Likewise, the FAX demodulators 102 demodulate the facsimile signals input to the equipment, and supply the data streams to the multiplexer 103. The multiplexer 103 carries out the assignment of speech activities of the coded speech signal data streams to a frame to be output to the bearer line first, followed by assignment of the speech activities of the coded VBD signal data streams and then by assignment of the demodulated facsimile signal data streams. The speech activities of the coded VBD signal data streams and the demodulated facsimile signal data streams, which are not assigned to the bearer frame, are transferred to the IP packet assembler 104. The IP packet assembler 104 packetizes the coded VBD signal data streams and the demodulated facsimile signal data streams delivered from the multiplexer 103 into an IP packet to be supplied to the IP network.

As described above, the present embodiment 1 assigns the VBD signals and facsimile signals other than the speech signals to the bearer frame at second precedence, and transmits the unassignable VBD signals and facsimile signals other than the speech signals over the IP network. This makes it possible to implement highly efficient transmission of speech signals on the bearer line with maintaining speech in high quality.

### EMBODIMENT 2

Fig. 2 is a block diagram showing a configuration of an embodiment 2 of the DCME in accordance with the present invention. In Fig. 2, the reference numeral 110 designates a speech channel multiplexer for multiplexing the data streams output from the speech encoders 101; 120 designates a FAX-BANK assembler for multiplexing and assembling the data streams output from the FAX demodulators 102 into a FAX-BANK; and 130 designates a bearer channel multiplexer for multiplexing the input data streams and supplying the multiplexed data streams to the bearer line.

The IP packet assembler 104 packetizes the data stream (FAX-BANK) fed from the FAX-BANK assembler 120 into IP packets, and supplies them to the IP network. The multiplexer 103 includes the speech channel multiplexer 110, FAX-BANK assembler 120 and bearer channel multiplexer 130.

Since the remaining configuration is the same as that of the foregoing embodiment 1, the description thereof is omitted here.

Next, the operation of the present embodiment 2 will be described.

The speech and facsimile signals supplied via the signal line 10 undergo signal processing by the speech encoders 101 and FAX demodulators 102 to be converted into digital data streams. The speech channel multiplexer 110 and FAX-BANK assembler 120 each multiplex the data streams to a data stream. In this case, the speech channel multiplexer 110 assembles the data stream by selecting speech activities first. The bearer channel multiplexer 130 multiplexes the data stream fed from the speech channel multiplexer 110 onto the bearer line to be transferred to the far end equipment. On the other hand, the data streams assembled by the FAX-BANK assembler 120 are assembled into IP packets by the IP packet assembler 104 to be transmitted over the IP network.

As described above, the present embodiment 2 creates IP packets from the FAX-BANK signal consisting of the facsimile signals multiplexed, and transmits the IP packets over the IP network. This makes it possible to implement highly efficient transmission of speech signals on the bearer line with maintaining speech in high quality.

### EMBODIMENT 3

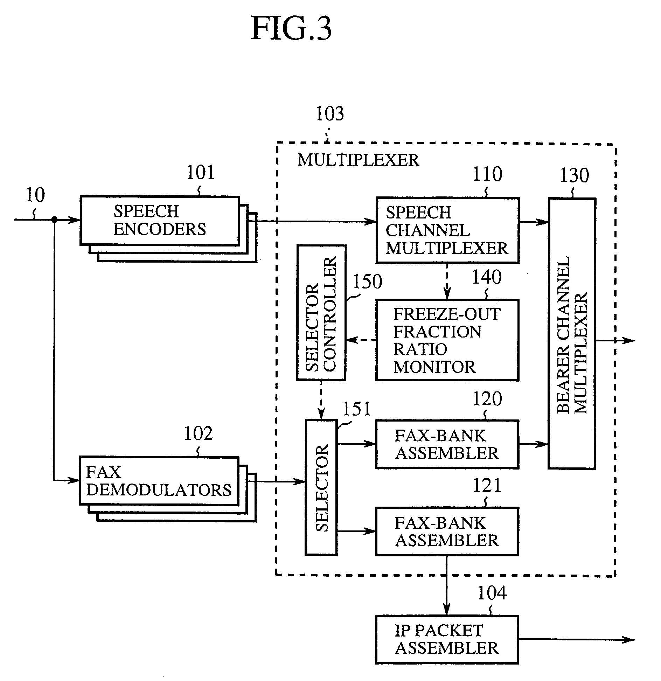

Fig. 3 is a block diagram showing a configuration of an embodiment 3 of the DCME in accordance with the present invention. In Fig. 3, the reference numerals 120 and 121 each designate a FAX-BANK assembler for assembling a FAX-BANK by multiplexing the data streams output from the FAX demodulators 102; 140 designates a freeze-out fraction ratio monitor for monitoring a freeze-out fraction ratio of the speech channel multiplexer 110; 150 designates a selector controller for controlling a selector 151 in response to a signal from the freeze-out fraction ratio monitor 140; and 151 designates the selector for allocating the data from the FAX demodulators 102 to the FAX-BANK assembler 120 and FAX-BANK assembler 121 in response to the signal from the selector controller 150.

The IP packet assembler 104 packetizes the data streams fed from the FAX-BANK assembler 121 into IP packets to be output to the IP network. The bearer channel multiplexer 130 multiplexes the data streams supplied from the speech channel multiplexer 110 and FAX-BANK assembler 120, and supplies a multiplexed signal to the bearer line. The multiplexer 103 includes the speech channel multiplexer 110, FAX-BANK assembler 120, FAX-BANK assembler 121, freeze-out fraction ratio monitor 140, selector controller 150, selector 151 and bearer channel multiplexer 130.

Since the remaining configuration is the same as that of the foregoing embodiment 2, the description thereof is omitted here.

Next, the operation of the present embodiment 3 will be described.

The speech signals and facsimile signals input via the signal line 10 are processed by the speech encoders 101 and FAX demodulators 102 to be converted into digital data streams. The speech channel multiplexer 110 assembles the data stream by multiplexing the data streams from the speech encoders 101. Receiving part of the data streams from the FAX demodulators 102 via the selector 151, the FAX-BANK assembler 120 and 121 each assemble a data stream by multiplexing the data streams supplied. The bearer channel multiplexer 130 multiplexes the data streams fed from the speech channel multiplexer 110 and from the FAX-BANK assembler 120 onto the bearer line, and transmits them to the far end equipment. The IP packet assembler 104 packetizes the data stream, which are assembled by the FAX-BANK assembler 121, into IP packets to be output to the IP network. The freeze-out fraction ratio monitor 140 monitors the freeze-out fraction ratio, the ratio of the speech activities not selected and hence not assembled into the speech stream by the speech channel multiplexer 110 that selects the speech activities first and assembles them into the data stream. The selector controller 150 controls the selector 151 in response to the freeze-out fraction ratio. When the freeze-out fraction ratio is zero or lower than a particular threshold value, the selector controller 150 controls the selector 151 such that all the data streams from the FAX demodulators 102 are supplied to the FAX-BANK assembler 120. As the freeze-out fraction ratio increases, the selector controller 150 controls the selector 151 such that increasing data streams are supplied from the FAX demodulators 102 to the FAX-BANK assembler 121, thereby reducing the data streams supplied from the FAX demodulators 102 to the FAX-BANK assembler 120, thereby.

As described above, the present embodiment 3 monitors the freeze-out fraction ratio of the speech signals to be multiplexed onto the bearer line, and controls the data volume of the FAX-BANK signal to be multiplexed onto the bearer line in response to the freeze-out fraction ratio, with packetizing an increasing data stream of the FAX-BANK into IP packets to be transmitted over the IP network when the freeze-out fraction ratio increases. This makes it possible to implement the highly efficient transmission of speech signals over the bearer line with maintaining speech in high quality.

### EMBODIMENT 4

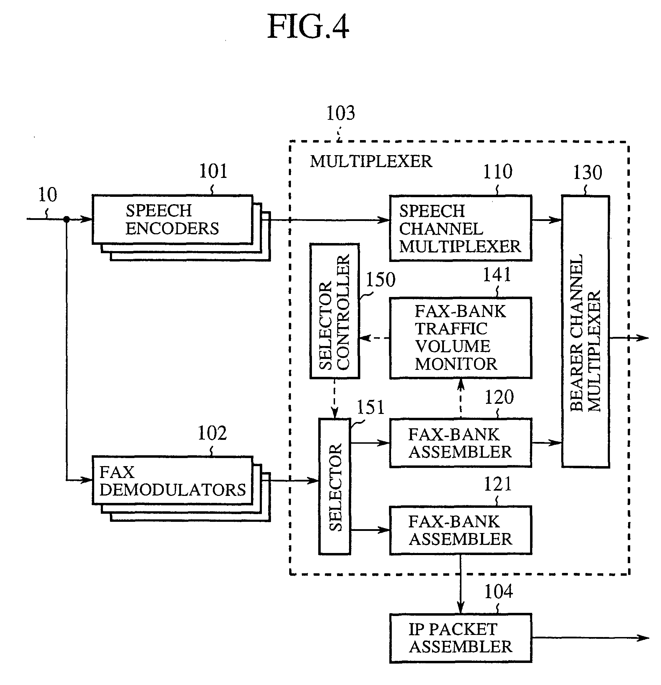

Fig. 4 is a block diagram showing a configuration of an embodiment 4 of the DCME in accordance with the present invention. In Fig. 4, the reference numeral 141 designates a FAX-BANK traffic volume monitor for monitoring the data volume of the FAX-BANK assembler 120.

The selector controller 150 controls the selector 151 in response to the signal from the FAX-BANK traffic volume monitor 141. The multiplexer 103 comprises the speech channel multiplexer 110, FAX-BANK assembler 120, FAX-BANK assembler 121, FAX-BANK traffic volume monitor 141, selector controller 150, selector 151 and bearer channel multiplexer 130.

Since the remaining configuration is the same as that of the foregoing embodiment 3, the description thereof is omitted here.

Next, the operation of the present embodiment 4 will be described.

The FAX-BANK traffic volume monitor 141 monitors the data volume of the FAX-BANK assembled by the FAX-BANK assembler 120. The selector controller 150 controls the selector 151 in response to the FAX-BANK traffic volume informed by the FAX-BANK traffic volume monitor 141. When the FAX-BANK traffic volume is lower than a particular threshold value, the selector controller 150 controls the selector 151 such that all the data streams from the FAX demodulators 102 are supplied to the FAX-BANK assembler 120. When the FAX-BANK traffic volume exceeds the particular threshold value, the selector controller 150 controls the selector 151 such that increasing data streams are supplied from the FAX demodulators 102 to the FAX-BANK assembler 121 to prevent the FAX-BANK traffic volume from increasing beyond the threshold value.

As described above, the present embodiment 4 monitors the FAX-BANK traffic volume multiplexed onto the bearer line, and controls the data volume of the FAX-BANK signal to be multiplexed onto the bearer line so that the FAX-BANK traffic volume on the bearer line is limited, and the FAX-BANK data stream exceeding the limit is packetized into IP packets to be transmitted over the IP network. This makes it possible to implement the highly efficient transmission of speech signals over the bearer line with maintaining speech in high quality.

### EMBODIMENT 5

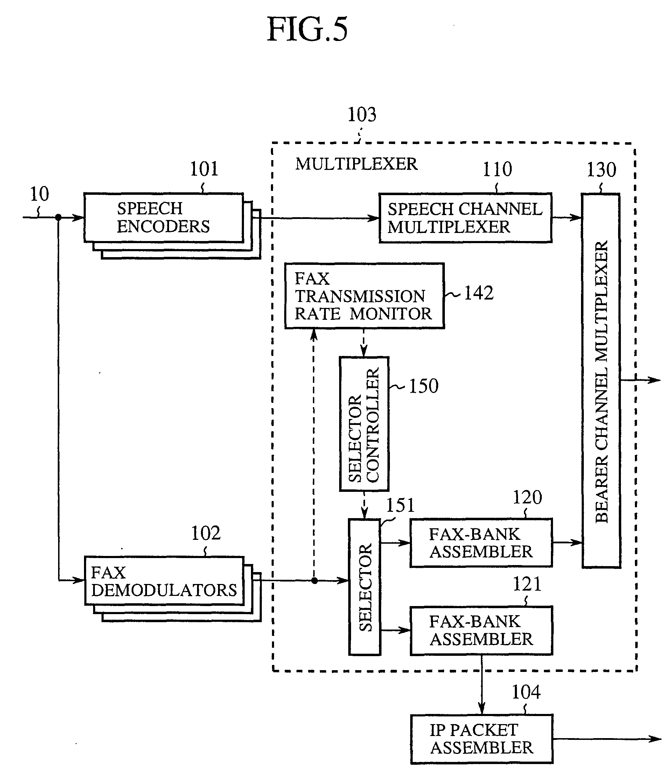

Fig. 5 is a block diagram showing a configuration of an embodiment 5 of the DCME in accordance with the present invention. In Fig. 5, the reference numeral 142 designates a FAX transmission rate monitor for monitoring transmission rates of the facsimile signals output from the FAX demodulators 102.

The selector controller 150 controls the selector 151 in response to the signal fed from the FAX transmission rate monitor 142. The multiplexer 103 comprises the speech channel multiplexer 110, FAX-BANK assembler 120, FAX-BANK assembler 121, FAX transmission rate monitor 142, selector controller 150, selector 151 and bearer channel multiplexer 130.

Since the remaining configuration is the same as that of the foregoing embodiment 3, the description thereof is omitted here.

Next, the operation of the present embodiment 5 will be described.

The FAX transmission rate monitor 142 monitors the transmission rates of the facsimile signals demodulated by the FAX demodulators 102 and input to the selector 151. The selector controller 150 controls the selector 151 in response to the FAX transmission rates fed from the FAX transmission rate monitor 142 such that the data streams whose FAX transmission rates are lower than a particular threshold value are supplied to the FAX-BANK assembler 120, and that the data streams whose FAX transmission rates are higher than the particular threshold value are supplied to the FAX-BANK assembler 121.

As described above, the present embodiment 5 monitors the transmission rates of the facsimile signals, and limits the rates of the facsimile signals to be assembled into the FAX-BANK which is to be multiplexed onto the bearer line, with reducing the FAX-BANK traffic volume to be multiplexed onto the bearer line. Thus, the FAX-BANK traffic volume on the bearer line is limited. This makes it possible to packetize large volume, high speed facsimile data streams into IP packets to be transmitted over the IP network. Thus, the highly efficient transmission of speech signals is implemented over the bearer line with maintaining speech in high quality.

### EMBODIMENT 6

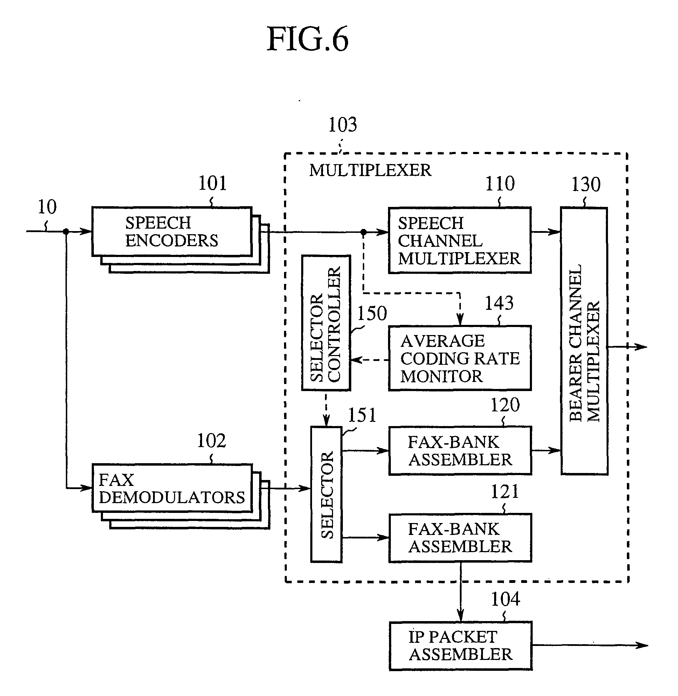

Fig. 6 is a block diagram showing a configuration of an embodiment 6 of the DCME in accordance with the present invention. In Fig. 6, the reference numeral 143 designates an average coding rate monitor for monitoring the average coding rate of the coded speech signals output from the speech encoders 101.

The selector controller 150 controls the selector 151 in response to the signal fed from the average coding rate monitor 143. The multiplexer 103 comprises the speech channel multiplexer 110, FAX-BANK assembler 120, FAX-BANK assembler 121, average coding rate monitor 143, selector controller 150, selector 151 and bearer channel multiplexer 130.

Since the remaining configuration is the same as that of the foregoing embodiment 3, the description thereof is omitted here.

Next, the operation of the present embodiment 6 will be described.

The average coding rate monitor 143 monitors the average coding rate of the coded speech signals encoded by the speech encoders 101. The selector controller 150 controls the selector 151 in response to the average coding rate fed from the average coding rate monitor 143. A coding scheme applied to the VBD signals by the speech encoders 101 is faster than that applied to the speech signals. A higher average coding rate means an increase of the transmission ratio of the VBD signals. Taking account of this, when the average coding rate is lower than a particular threshold value, the selector controller 150 controls the selector 151 such that all the data streams from the FAX demodulators 102 are supplied to the FAX-BANK assembler 120. As the average coding rate increases, the selector controller 150 controls the selector 151 such that increasing data streams are supplied from the FAX demodulators 102 to the FAX-BANK assembler 121 to reduce the data streams supplied from the FAX demodulators 102 to the FAX-BANK assembler 120.

As described above, the present embodiment 6 monitors the average coding rate, and limits the data volume of the FAX-BANK to be multiplexed onto the bearer line in response to the average coding rate. Thus, the FAX-BANK traffic volume on the bearer line is limited by packetizing, in response to an increase in the average coding rate, an increasing amount of FAX-BANK data stream into IP packets to be transmitted over the IP network. This makes it possible to implement the highly efficient transmission of the speech signals over the bearer line with maintaining speech in high quality.

### EMBODIMENT 7

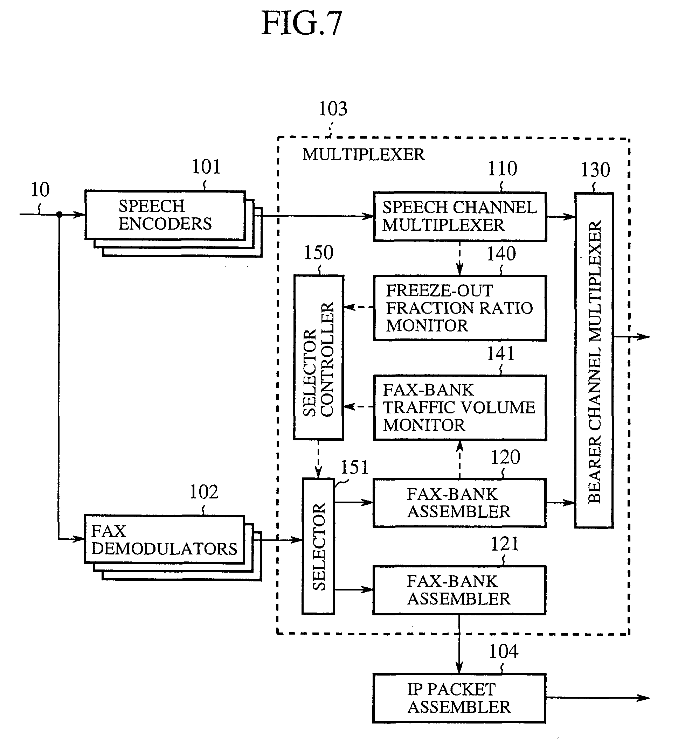

Fig. 7 is a block diagram showing a configuration of an embodiment 7 of the DCME in accordance with the present invention. In Fig. 7, the selector controller 150 controls the selector 151 in response to the signals fed from the freeze-out fraction ratio monitor 140 and FAX-BANK traffic volume monitor 141. The multiplexer 103 comprises the speech channel multiplexer 110, FAX-BANK assembler 120, FAX-BANK assembler 121, freeze-out fraction ratio monitor 140, FAX-BANK traffic volume monitor 141, selector controller 150, selector 151 and bearer channel multiplexer 130.

Since the remaining configuration is the same as that of the foregoing embodiments 3 and 4, the description thereof is omitted here.

Next, the operation of the present embodiment 7 will be described.

The freeze-out fraction ratio monitor 140 monitors the freeze-out fraction ratio, the ratio of the speech activities which are not selected and hence not assembled into the data stream by the speech channel multiplexer 110 that selects the speech activities first to be assembled into the data stream. On the other hand, the FAX-BANK traffic volume monitor 141 monitors the data volume of the FAX-BANK assembled by the FAX-BANK assembler 120. The selector controller 150 controls the selector 151 in response to the freeze-out fraction ratio and FAX-BANK traffic volume fed from the freeze-out fraction ratio monitor 140 and FAX-BANK traffic volume monitor 141, respectively. When the freeze-out fraction ratio is zero or lower than a particular threshold value, the selector controller 150 controls the selector 151 in response to the FAX-BANK traffic volume such that the FAX-BANK traffic volume is limited within a particular threshold by limiting the data volume supplied from the FAX demodulators 102 to the FAX-BANK assembler 120 and by supplying the data streams beyond the threshold value from the FAX demodulators 102 to the FAX-BANK assembler 121. In contrast, when the freeze-out fraction ratio exceeds the particular threshold value, the selector controller 150 controls the selector 151 such that increasing data streams are supplied from the FAX demodulators 102 to the FAX-BANK assembler 121 as the freeze-out fraction ratio increases in order to reduce the data streams supplied from the FAX demodulators 102 to the FAX-BANK assembler 120.

As described above, the present embodiment 7 monitors the freeze-out fraction ratio of the speech signals and the traffic volume of the FAX-BANK to be multiplexed onto the bearer line, and controls the data volume of the FAX-BANK signal to be multiplexed onto the bearer line in response to the freeze-out fraction ratio and FAX-BANK traffic volume. This makes it possible to limit the FAX-BANK traffic volume to be multiplexed onto the bearer line, and to packetize the facsimile signals beyond the limit into IP packets to be transmitted over the IP network as a separate FAX-BANK data stream. In addition, when the freeze-out fraction ratio increases, the FAX-BANK traffic volume to be multiplexed onto the bearer line is further limited by increasing the facsimile signals which are packetized into IP packets to be transmitted over the IP network as separate data stream of the FAX-BANK. Thus, the highly efficient transmission of speech signals is implemented over the bearer line with maintaining speech in high quality.

### EMBODIMENT 8

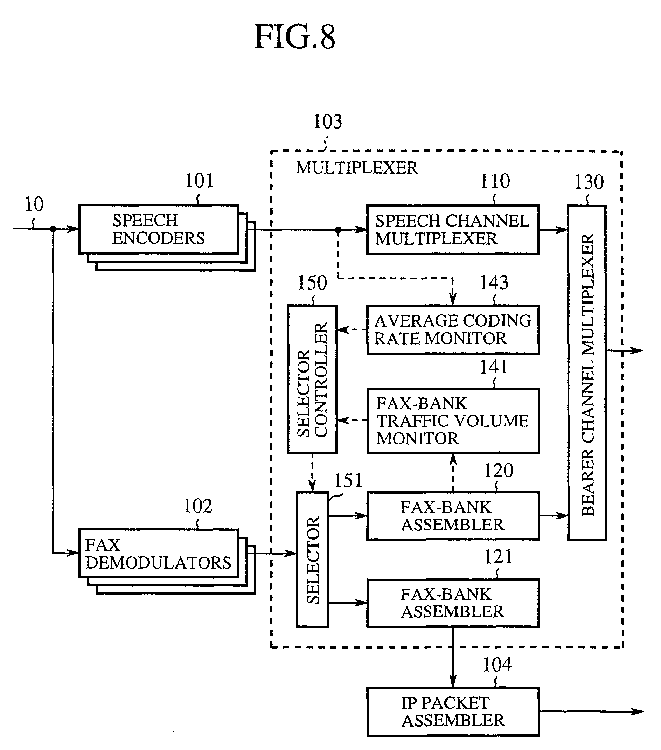

Fig. 8 is a block diagram showing a configuration of an embodiment 8 of the DCME in accordance with the present invention. In Fig. 8, the selector controller 150 controls the selector 151 in response to the signals from the average coding rate monitor 143 and FAX-BANK traffic volume monitor 141. The multiplexer 103 comprises the speech channel multiplexer 110, FAX-BANK assembler 120, FAX-BANK assembler 121, average coding rate monitor 143, FAX-BANK traffic volume monitor 141, selector controller 150, selector 151 and bearer channel multiplexer 130.

Since the remaining configuration is the same as that of the foregoing embodiments 4 and 6, the description thereof is omitted here.

Next, the operation of the present embodiment 8 will be described.

The average coding rate monitor 143 monitors the average coding rate of the signals coded by the speech encoders 101. The coding scheme applied to the VBD signals by the speech encoders 101 is faster than that applied to the speech signals. Thus, an increase in the average coding rate means an increase in the transmission ratio of the VBD signals. On the other hand, the FAX-BANK traffic volume monitor 141 monitors the data volume of the FAX-BANK assembled by the FAX-BANK assembler 120. The selector controller 150 controls the selector 151 in response to the average coding rate and FAX-BANK traffic volume fed from the average coding rate monitor 143 and the FAX-BANK traffic volume monitor 141, respectively. When the average coding rate is lower than a particular threshold value, the selector controller 150 controls the selector 151 in response to the FAX-BANK traffic volume such that it regulates the data volume supplied from the FAX demodulators 102 to the FAX-BANK assembler 120 in order to limit the FAX-BANK traffic volume within a particular threshold value by supplying the data streams beyond the limit from the FAX demodulators 102 to the FAX-BANK assembler 121. In contrast, when the average coding rate exceeds the particular threshold value, the selector controller 150 controls the selector 151 such that the data streams supplied from the FAX demodulators 102 to the FAX-BANK assembler 120 are decreased with an increase of the average coding rate by increasing the data streams supplied from the FAX demodulators 102 to the FAX-BANK assembler 121.

As described above, the present embodiment 8 monitors both the average coding rate of the coded speech signals and the FAX-BANK traffic volume to be multiplexed onto the bearer line, and controls the data volume of the FAX-BANK signal to be multiplexed onto the bearer line in response to the average coding rate and FAX-BANK traffic volume. This makes it possible to limit the FAX-BANK traffic volume to be multiplexed onto the bearer line by transferring to the IP network the facsimile signals beyond the limit by packetizing them into IP packets to be transmitted over the IP network as a separate data stream of the FAX-BANK. In addition, as the average coding rate increases, the FAX-BANK traffic volume to be multiplexed onto the bearer line is further limited by increasing the facsimile signals transmitted in IP packets over the IP network as a separate data stream of the FAX-BANK. Thus, the highly efficient transmission of speech signals is implemented on the bearer line with maintaining speech in high quality.

### EMBODIMENT 9

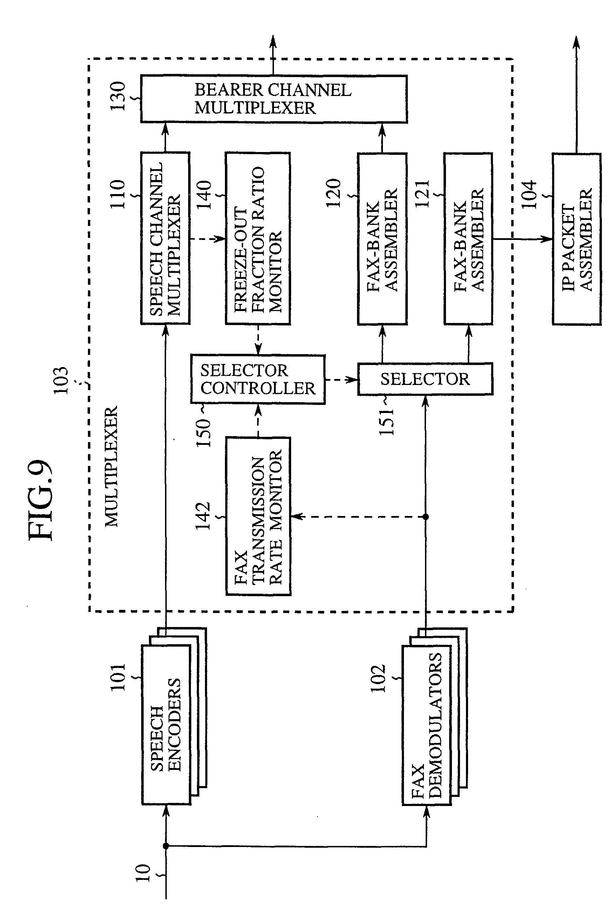

Fig. 9 is a block diagram showing a configuration of an embodiment 9 of the DCME in accordance with the present invention. In Fig. 9, the selector controller 150 controls the selector 151 in response to the signals fed from the freeze-out fraction ratio monitor 140 and FAX transmission rate monitor 142. The multiplexer 103 comprises the speech channel multiplexer 110, FAX-BANK assembler 120, FAX-BANK assembler 121, freeze-out fraction ratio monitor 140, FAX transmission rate monitor 142, selector controller 150, selector 151 and bearer channel multiplexer 130.

Since the remaining configuration is the same as that of the embodiments 3 and 5, the description thereof is omitted here.

Next, the operation of the present embodiment 9 will be described.

The freeze-out fraction ratio monitor 140 monitors as the freeze-out fraction ratio, the ratio of the speech activities not selected and hence not assembled by the speech channel multiplexer 110 that selects the speech activities first and assembles them into the data stream. On the other hand, the FAX transmission rate monitor 142 monitors the transmission rates of the data streams of the facsimile signals demodulated by the FAX demodulators 102. The selector controller 150 controls the selector 151 in response to the freeze-out fraction ratio and FAX transmission rates fed from the freeze-out fraction ratio monitor 140 and FAX transmission rate monitor 142, respectively. When the freeze-out fraction ratio is zero or lower than a particular threshold value, the selector controller 150 controls the selector 151 such that both low- and high-speed facsimile signals are supplied to the FAX-BANK assembler 120. In contrast, when the freeze-out fraction ratio exceeds the particular threshold value, the selector controller 150 controls the selector 151 such that increasing data streams are supplied from the FAX demodulators 102 to the FAX-BANK assembler 121 as the freeze-out fraction ratio increases to decrease the transmission rate of the facsimile signals supplied from the FAX demodulators 102 to the FAX-BANK assembler 120.

As described above, the present embodiment 9 monitors the freeze-out fraction ratio of the speech signals to be multiplexed onto the bearer line and the FAX transmission rates of the facsimile signals, and controls the data volume of the FAX-BANK signal to be multiplexed onto the bearer line in response to the freeze-out fraction ratio and FAX transmission rates. This makes it possible to limit the transmission rates of the facsimile signals to be multiplexed onto the bearer line, and to transmit the facsimile signals beyond the limit in IP packets over the IP network as a separate data stream of the FAX-BANK. In addition, as the freeze-out fraction ratio increases, the transmission rate of the facsimile signals to be multiplexed onto the bearer line is further limited by increasing the facsimile signals transmitted in IP packets over the IP network as a separate data stream of the FAX-BANK. This can implement the highly efficient transmission of speech signals over the bearer line with maintaining speech in high quality.

### EMBODIMENT 10

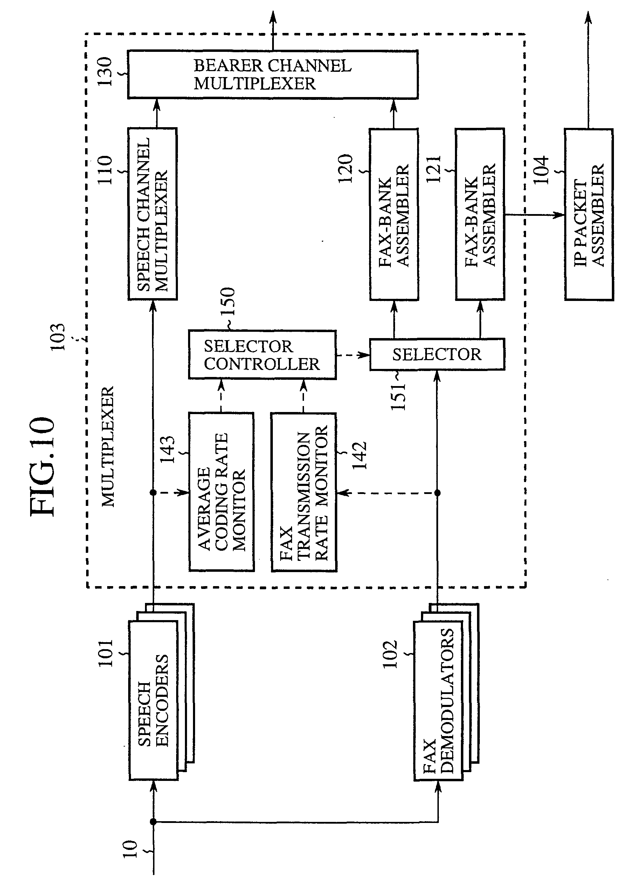

Fig. 10 is a block diagram showing a configuration of an embodiment 10 of the DCME in accordance with the present invention. In Fig. 10, the selector controller 150 controls the selector 151 in response to the signals from the average coding rate monitor 143 and FAX transmission rate monitor 142. The multiplexer 103 comprises the speech channel multiplexer 110, FAX-BANK assembler 120, FAX-BANK assembler 121, average coding rate monitor 143, FAX transmission rate monitor 142, selector controller 150, selector 151 and bearer channel multiplexer 130.

Since the remaining configuration is the same as that of the embodiments 5 and 6, the description thereof is omitted here.

Next, the operation of the present embodiment 10 will be described.

The average coding rate monitor 143 monitors the average coding rate of the signals coded by the speech encoders 101. The coding scheme applied to the VBD signals in the speech encoders 101 is faster than that applied to the speech signals. Thus, an increase of the average coding rate means an increase of the transmission ratio of the VBD signals. On the other hand, the FAX transmission rate monitor 142 monitors the transmission rates of the data streams of the facsimile signals demodulated by the FAX demodulators 102. The selector controller 150 controls the selector 151 in response to the average coding rate and FAX transmission rates fed from the average coding rate monitor 143 and FAX transmission rate monitor 142, respectively. When the average coding rate is lower than a particular threshold value, the selector controller 150 controls the selector 151 such that it supplies both low- and high-speed facsimile signals to the FAX-BANK assembler 120. In contrast, when the average coding rate exceeds the particular threshold value, the selector controller 150 controls the selector 151 such that increasing data streams are supplied from the FAX demodulators 102 to the FAX-BANK assembler 121 as the average coding rate increases, to decrease the transmission rate of the facsimile signals supplied from the FAX demodulators 102 to the FAX-BANK assembler 120.

As described above, the present embodiment 10 monitors the average coding rate of the coded speech signal and the FAX transmission rates of the facsimile signals, and controls the data volume of the FAX-BANK signal to be multiplexed onto the bearer line in response to the average coding rate and the FAX transmission rates. This makes it possible to limit the transmission rate of the facsimile signals to be multiplexed onto the bearer line by transmitting the facsimile signals beyond the limit in IP packets over the IP network as a separate data stream of the FAX-BANK. In addition, as the average coding rate increases, the transmission rate of the facsimile signals to be multiplexed onto the bearer line is further limited by increasing the facsimile signals to be transmitted in the IP packets over the IP network as the separate data stream of the FAX-BANK. Thus, the highly efficient transmission of speech signals can be implemented on the bearer line with maintaining speech in high quality.

### EMBODIMENT 11

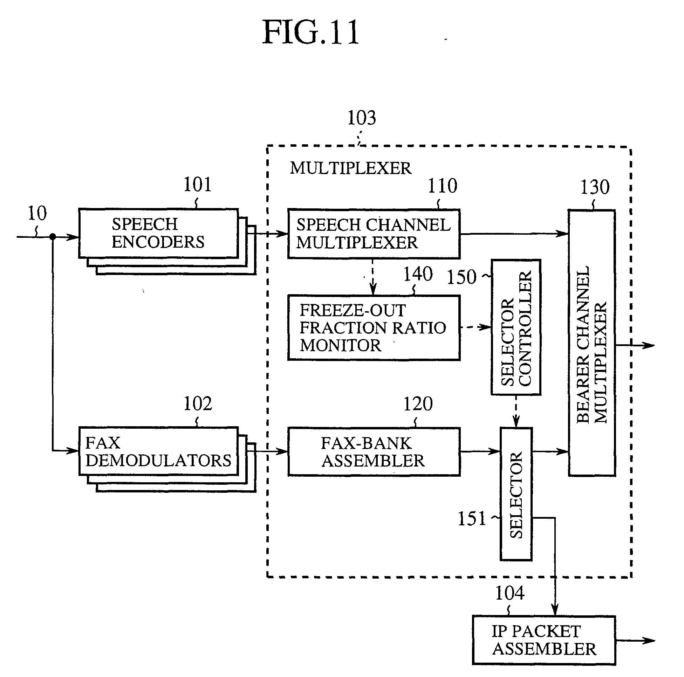

Fig. 11 is a block diagram showing a configuration of an embodiment 11 of the DCME in accordance with the present invention. In Fig. 11, the reference numeral 140 designates a freeze-out fraction ratio monitor for monitoring the freeze-out fraction ratio in the speech channel multiplexer 110; 150 designates a selector controller for controlling a selector 151 in response to the signal from the freeze-out fraction ratio monitor 140; and 151 designates the selector for distributing the data from the FAX-BANK assembler 120 to the bearer channel multiplexer 130 and IP packet assembler 104 in response to the signal from the selector controller 150.

The IP packet assembler 104 provides the IP network with the data streams supplied from the FAX-BANK assembler 120 via the selector 151 and packetized into IP packets. The bearer channel multiplexer 130 multiplexes the data stream from the speech channel multiplexer 110 with the data stream from the FAX-BANK assembler 120 via the selector 151, and supplies the multiplexed streams to the bearer line. The multiplexer 103 comprises the speech channel multiplexer 110, FAX-BANK assembler 120, freeze-out fraction ratio monitor 140, selector controller 150, selector 151 and bearer channel multiplexer 130.

Since the remaining configuration is the same as that of the embodiment 2, the description thereof is omitted here.

Next, the operation of the present embodiment 11 will be described.

The speech signals and facsimile signals input through the signal line 10 undergo signal processings by the speech encoders 101 and FAX demodulators 102 to be converted into digital data streams. The speech channel multiplexer 110 multiplexes the data streams from the speech encoders 101 to assemble them into a data stream. Likewise, the FAX-BANK assembler 120 multiplexes the data streams from the FAX demodulators 102 to assemble them into another data stream. The bearer channel multiplexer 130 multiplexes the data stream from the speech channel multiplexer 110 and the data stream from the FAX-BANK assembler 120 via the selector 151 onto the bearer line to be transmitted to the far end equipment. Part of the data stream assembled by the FAX-BANK assembler 120 is supplied through the selector 151 to the IP packet assembler 104 that assembles it into IP packets to be transmitted over the IP network. The speech channel multiplexer 110 selects the speech activities first, and assembles them into the data stream. In this case, the freeze-out fraction ratio monitor 140 monitors as the freeze-out fraction ratio, the ratio of the speech activities which are not selected and hence are not assembled. The selector controller 150 controls the selector 151 in response to the freeze-out fraction ratio. When the freeze-out fraction ratio is zero or lower than a particular threshold value, it controls the selector 151 such that all the data streams from the FAX-BANK assembler 120 are supplied to the bearer channel multiplexer 130. As the freeze-out fraction ratio increases, the selector controller 150 controls the selector 151 such that an increasing data stream is supplied from the FAX-BANK assembler 120 to the IP packet assembler 104 to decrease the data stream supplied from the FAX-BANK assembler 120 to the bearer channel multiplexer 130.

As described above, the present embodiment 11 monitors the freeze-out fraction ratio of the speech signals to be multiplexed onto the bearer line, and controls the data volume of the FAX-BANK signal to be multiplexed onto the bearer line in response to the freeze-out fraction ratio. This makes it possible to transmit in IP packets an increasing amount of data stream of the FAX-BANK over the IP network with an increase of the freeze-out fraction ratio, thereby implementing the highly efficient transmission of speech signals over the bearer line with maintaining speech in high quality.

### EMBODIMENT 12

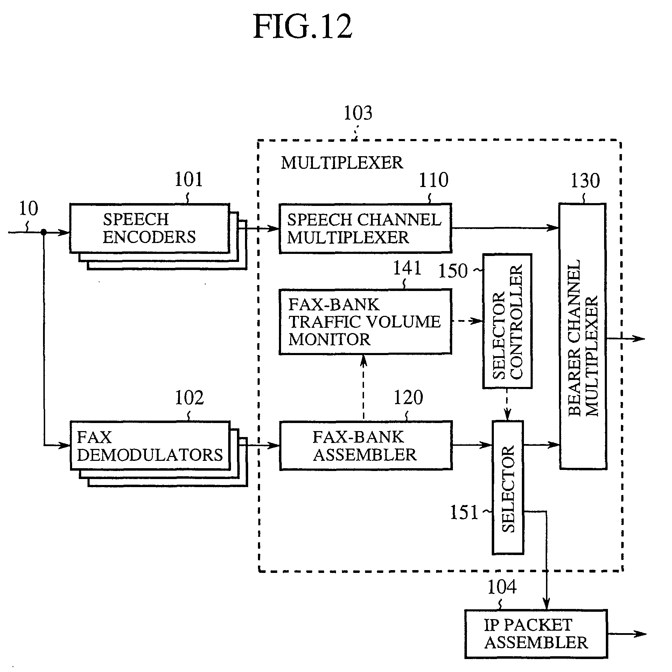

Fig. 12 is a block diagram showing a configuration of an embodiment 12 of the DCME in accordance with the present invention. In Fig. 12, the reference numeral 141 designates a FAX-BANK traffic volume monitor for monitoring the data volume of the FAX-BANK assembler 120.

The selector controller 150 controls the selector 151 in response to the signal from the FAX-BANK traffic volume monitor 141. The multiplexer 103 comprises the speech channel multiplexer 110, FAX-BANK assembler 120, FAX-BANK traffic volume monitor 141, selector controller 150, selector 151 and bearer channel multiplexer 130.

Since the remaining configuration is the same as that of the embodiment 11, the description thereof is omitted here.

Next, the operation of the present embodiment 12 will be described.

The FAX-BANK traffic volume monitor 141 monitors the data volume of the FAX-BANK assembled by the FAX-BANK assembler 120. The selector controller 150 controls the selector 151 in response to the FAX-BANK traffic volume fed from the FAX-BANK traffic volume monitor 141. When the FAX-BANK traffic volume is less than a particular threshold value, the selector controller 150 controls the selector 151 such that the entire data stream from the FAX-BANK assembler 120 is supplied to the bearer channel multiplexer 130. In contrast, when the FAX-BANK traffic volume exceeds the particular threshold value, the selector controller 150 controls the selector 150 such that increasing part of the data stream is supplied from the FAX-BANK assembler 120 to the IP packet assembler 104 to prevent the FAX-BANK traffic volume to be multiplexed onto the bearer line from being further increased.

As described above, the present embodiment 12 monitors the FAX-BANK traffic volume to be multiplexed onto the bearer line, and controls the data volume of the FAX-BANK signal to be multiplexed onto the bearer line. This makes it possible to limit the FAX-BANK traffic volume transmitted over the bearer line by transmitting in IP packets the data stream of the FAX-BANK beyond the limit over the IP network. Thus, the highly efficient transmission of speech signals can be implemented over the bearer line with maintaining speech in high quality.

### EMBODIMENT 13

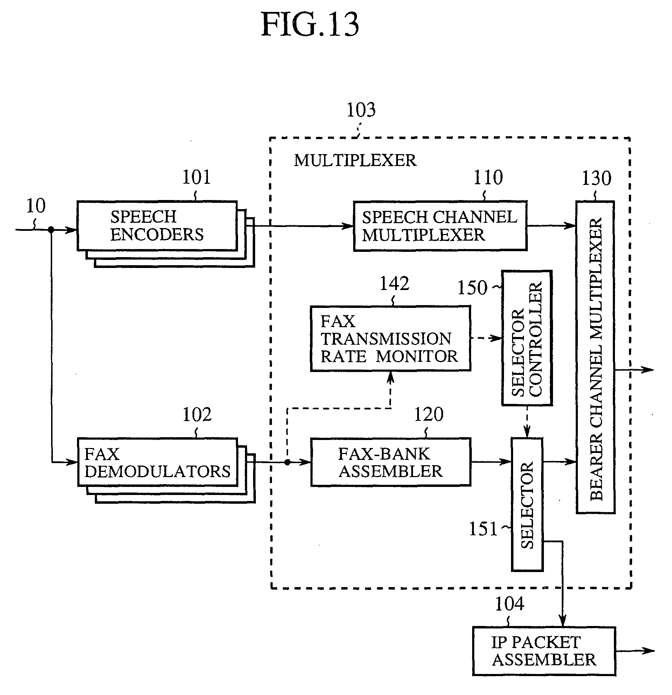

Fig. 13 is a block diagram showing a configuration of an embodiment 13 of the DCME in accordance with the present invention. In Fig. 13, the reference numeral 142 designates a FAX transmission rate monitor for monitoring the transmission rates of the facsimile signals output from the FAX demodulators 102.

The selector controller 150 controls the selector 151 in response to the signal fed from the FAX transmission rate monitor 142. The multiplexer 103 comprises the speech channel multiplexer 110, FAX-BANK assembler 120, FAX transmission rate monitor 142, selector controller 150, selector 151 and bearer channel multiplexer 130.

Since the remaining configuration is the same as that of the embodiment 11, the description thereof is omitted here.

Next, the operation of the present embodiment 11 will be described.

The FAX transmission rate monitor 142 monitors the transmission rates of the individual facsimile signals which are demodulated by the FAX demodulators 102 and supplied to the FAX-BANK assembler 120. The selector controller 150 controls the selector 151 in response to the FAX transmission rates fed from the FAX transmission rate monitor 142. When the sum total of the FAX transmission rates is lower than a particular threshold value, the selector controller 150 controls the selector 151 such that the entire data stream from the FAX-BANK assembler 120 is supplied to the bearer channel multiplexer 130. In contrast, when the sum total of the FAX transmission rates exceeds the particular threshold value, the selector controller 150 controls the selector 151 such that increasing part of the data stream is supplied from the FAX-BANK assembler 120 to the IP packet assembler 104 to prevent the data stream supplied from the FAX-BANK assembler 120 to the bearer channel multiplexer 130 from being further increased.

As described above, the present embodiment 13 monitors the sum total of the transmission rates of the facsimile signals, and limits the FAX-BANK traffic volume to be multiplexed onto the bearer line to maintain the FAX-BANK traffic volume to be multiplexed onto the bearer line within a certain level. This makes it possible to limit the FAX-BANK traffic volume on the bearer line, and to transmit part of the data stream, which is output from FAX-BANK and exceeds the limit, to be transmitted in IP packets over the IP network, thereby implementing the highly efficient transmission of speech signals over the bearer line with maintaining speech in high quality.

### EMBODIMENT 14

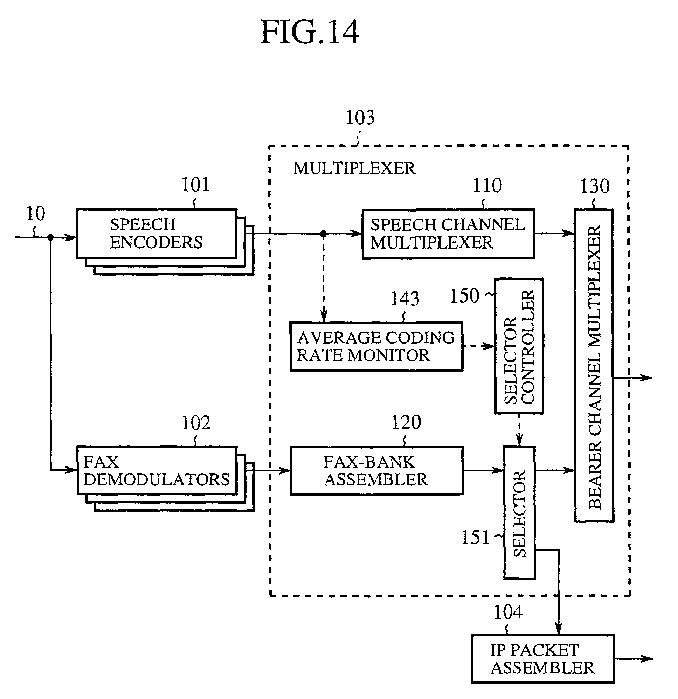

Fig. 14 is a block diagram showing a configuration of an embodiment 14 of the DCME in accordance with the present invention. In Fig. 14, the reference numeral 143 designates an average coding rate monitor for monitoring the average coding rate of the coded speech signals output from the speech encoders 101.

The selector controller 150 controls the selector 151 in response to the signal fed from the average coding rate monitor 143. The multiplexer 103 comprises the speech channel multiplexer 110, FAX-BANK assembler 120, average coding rate monitor 143, selector controller 150, selector 151 and bearer channel multiplexer 130.

Since the remaining configuration is the same as that of the embodiment 11, the description thereof is omitted here.

Next, the operation of the present embodiment 14 will be described.

The average coding rate monitor 143 monitors the average coding rate of the speech signals coded by the speech encoders 101. The selector controller 150 controls the selector 151 in response to the average coding rate fed from the average coding rate monitor 143. The coding scheme applied to the VBD signals in the speech encoders 101 is faster than the coding scheme applied to the speech signals. Thus, an increase in the average coding rate means an increase of the transmission ratio of the VBD signals. When the average coding rate is lower than a particular threshold value, the selector controller 150 controls the selector 151 such that the entire data stream from the FAX-BANK assembler 120 is supplied to the bearer channel multiplexer 130. As the average coding rate increases, the selector controller 150 controls the selector 151 such that increasing data stream is supplied from the FAX-BANK assembler 120 to the IP packet assembler 104 to decrease the data stream supplied from the FAX-BANK assembler 120 to the bearer channel multiplexer 130.

As described above, the present embodiment 14 monitors the average coding rate, and limits the data volume of the FAX-BANK to be multiplexed onto the bearer line in response to the average coding rate. This makes it possible to limit the FAX-BANK traffic volume on the bearer channel by transmitting an increasing amount of the FAX-BANK data stream in IP packets over the IP network as the average coding rate increases, thereby implementing the highly efficient transmission of speech signals over the bearer line with maintaining speech in high quality.

### EMBODIMENT 15

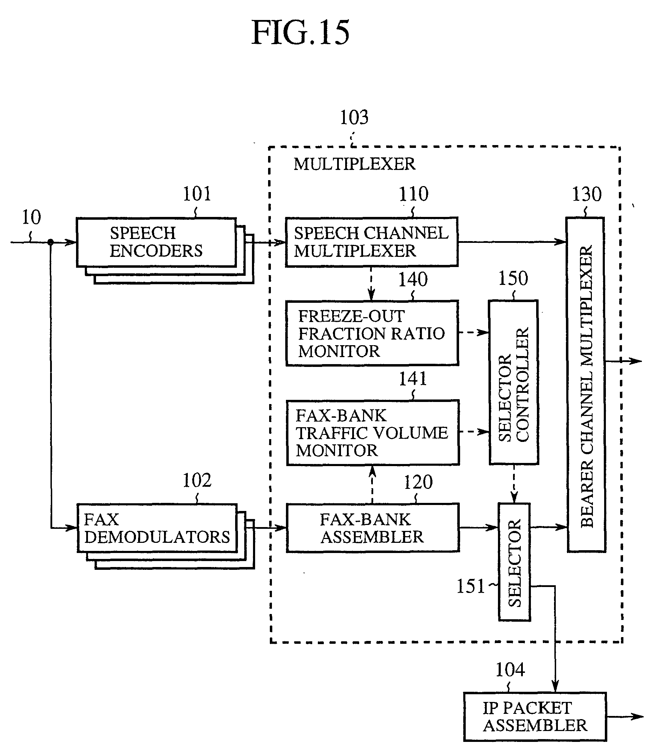

Fig. 15 is a block diagram showing a configuration of an embodiment 15 of the DCME in accordance with the present invention. In Fig. 15, the selector controller 150 controls the selector 151 in response to the signals fed from the freeze-out fraction ratio monitor 140 and FAX-BANK traffic volume monitor 141. The multiplexer 103 comprises the speech channel multiplexer 110, FAX-BANK assembler 120, freeze-out fraction ratio monitor 140, FAX-BANK traffic volume monitor 141, selector controller 150, selector 151 and bearer channel multiplexer 130.

Since the remaining configuration is the same as that of the embodiments 11 and 12, the description thereof is omitted here.

Next, the operation of the present embodiment 15 will be described.

The speech channel multiplexer 110 selects the speech activities first to assemble the data stream, and the freeze-out fraction ratio monitor 140 monitors the ratio of the speech activities not assembled into the data streams as the freeze-out fraction ratio. The FAX-BANK traffic volume monitor 141 monitors the data volume of the FAX-BANK assembled into the FAX-BANK assembler 120. The selector controller 150 controls the selector 151 in response to the freeze-out fraction ratio fed from the freeze-out fraction ratio monitor 140 and to the FAX-BANK traffic volume fed from the FAX-BANK traffic volume monitor 141. When the freeze-out fraction ratio is zero or less than a particular threshold value, the selector controller 150 controls the selector 151 such that the FAX-BANK traffic volume multiplexed onto the bearer line does not exceed the particular threshold value by limiting the data volume supplied from the FAX-BANK assembler 120 to the bearer channel multiplexer 130 in response to the FAX-BANK traffic volume, and that the data stream beyond the limit is supplied from the FAX-BANK assembler 120 to the IP packet assembler 104. In contrast, when the freeze-out fraction ratio exceeds the particular threshold value, the selector controller 150 controls the selector 151 such that an increasing volume of the data stream is supplied from the FAX-BANK assembler 120 to the IP packet assembler 104 as the freeze-out fraction ratio increases to decrease the volume of the data stream supplied from FAX-BANK assembler 120 to the bearer channel multiplexer 130.

As described above, the present embodiment 15 monitors the freeze-out fraction ratio of the speech signals and FAX-BANK traffic volume to be multiplexed onto the bearer line, and controls the data volume of the FAX-BANK signal to be multiplexed onto the bearer line in response to the freeze-out fraction ratio and FAX-BANK traffic volume. This makes it possible to limit the FAX-BANK traffic volume to be multiplexed onto the bearer line, and to transmit the data stream of the FAX-BANK beyond the limit in IP packets over the IP network. In addition, as the freeze-out fraction ratio increases, an increasing volume of the FAX-BANK is transmitted in IP packets over the IP network to further limit the FAX-BANK traffic volume to be multiplexed onto the bearer line. Thus, the highly efficient transmission of speech signals can be implemented over the bearer line with maintaining speech in high quality.

### EMBODIMENT 16

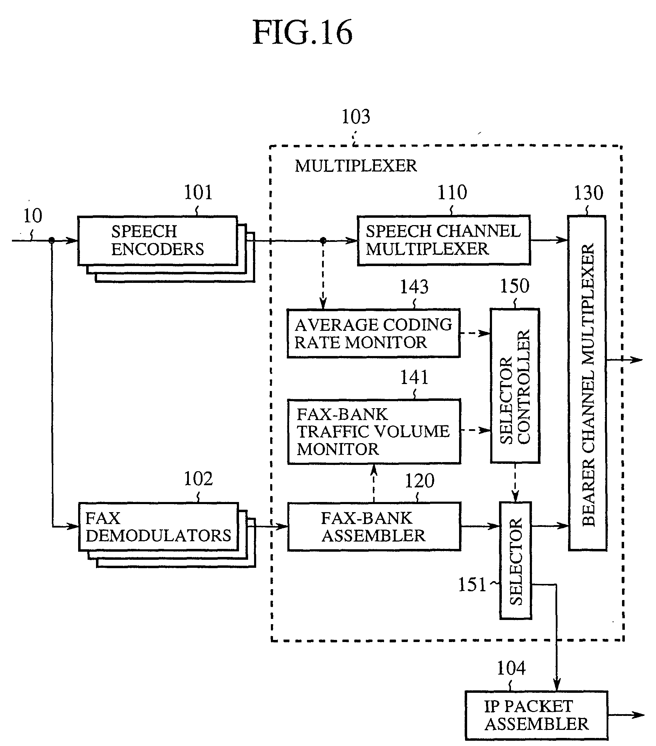

Fig. 16 is a block diagram showing a configuration of an embodiment 16 of the DCME in accordance with the present invention. In Fig. 16, the selector controller 150 controls the selector 151 in response to the signals fed from the average coding rate monitor 143 and FAX-BANK traffic volume monitor 141. The multiplexer 103 comprises the speech channel multiplexer 110, FAX-BANK assembler 120, average coding rate monitor 143, FAX-BANK traffic volume monitor 141, selector controller 150, selector 151 and bearer channel multiplexer 130.

Since the remaining configuration is the same as that of the embodiments 12 and 14, the description thereof is omitted here.

Next, the operation of the present embodiment 16 will be described.

The average coding rate monitor 143 monitors the average coding rate of the signals coded by the speech encoders 101. The coding scheme applied to the VBD signals by the speech encoders 101 is faster than coding scheme applied to the speech signal. Thus, an increase in the average coding rate means an increase in the transmission ratio of the VBD signals. The FAX-BANK traffic volume monitor 141 monitors the data volume of the FAX-BANK assembled by the FAX-BANK assembler 120. The selector controller 150 controls the selector 151 in response to the average coding rate fed from the average coding rate monitor 143 and the FAX-BANK traffic volume fed from the FAX-BANK traffic volume monitor 141. When the average coding rate is less than the particular threshold value, the selector controller 150 controls the selector 151 in response to the FAX-BANK traffic volume such that the FAX-BANK traffic volume to be multiplexed to the bearer line does not exceed the particular threshold value by limiting the data volume supplied from the FAX-BANK assembler 120 to the bearer channel multiplexer 130, and by supplying the data stream beyond the limit from the FAX-BANK assembler 120 to the IP packet assembler 104. In contrast, when the average coding rate exceeds the particular threshold value, the selector controller 150 controls the selector 150 in response to the average coding rate such that an increasing volume of the data stream is supplied from the FAX-BANK assembler 120 to the IP packet assembler 104 to decrease the volume of the data stream supplied from the FAX-BANK assembler 120 to the bearer channel multiplexer 130.

As described above, the present embodiment 16 of the DCME in accordance with the present invention monitors both the average coding rate and FAX-BANK traffic volume of the coded speech signal, and controls the data volume of the FAX-BANK signal to be multiplexed onto the bearer line in response to the average coding rate and FAX-BANK traffic volume. This makes it possible to control the FAX-BANK traffic volume to be multiplexed onto the bearer line by transmitting the data stream of the FAX-BANK beyond the limit in IP packets over the IP network. As the average coding rate increases, an increasing volume of the data stream of the FAX-BANK is transmitted in IP packets over the IP network to further limit the FAX-BANK traffic volume to be multiplexed onto the bearer line. Thus, the highly efficient transmission of speech signals can be implemented over the bearer line with maintaining speech in high quality.

### EMBODIMENT 17

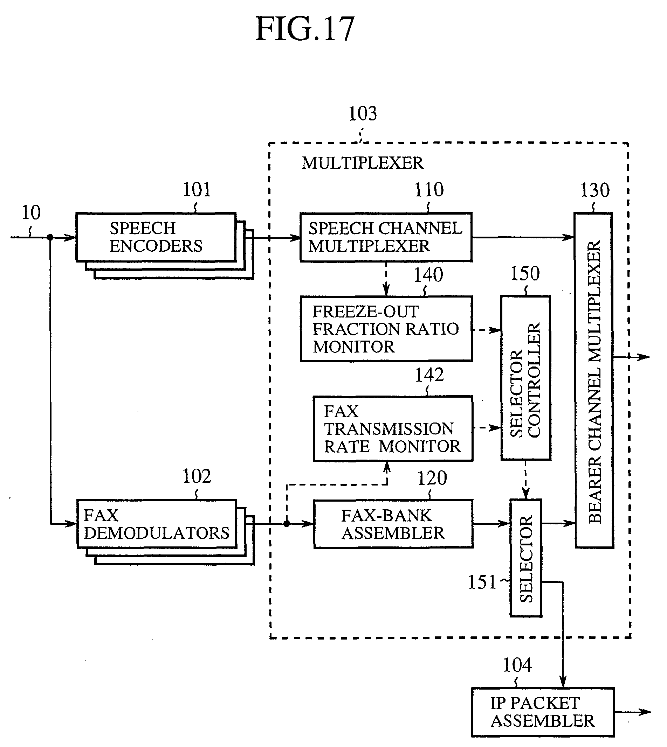

Fig. 17 is a block diagram showing a configuration of an embodiment 17 of the DCME in accordance with the present invention. In Fig. 17, the selector controller 150 controls the selector 151 in response to the signals fed from the freeze-out fraction ratio monitor 140 and FAX transmission rate monitor 142. The multiplexer 103 comprises the speech channel multiplexer 110, FAX-BANK assembler 120, freeze-out fraction ratio monitor 140, FAX transmission rate monitor 142, selector controller 150, selector 151 and bearer channel multiplexer 130.

Since the remaining configuration is the same as that of the embodiments 11 and 13, the description thereof is omitted here.

Next, the operation of the present embodiment 17 will be described.

The speech channel multiplexer 110 selects the speech activities first, and assembles them into a data stream. In this case, the freeze-out fraction ratio monitor 140 monitors the speech activities not assembled into the data streams as the freeze-out fraction ratio. On the other hand, the FAX transmission rate monitor 142 monitors the transmission rates of the data streams of the facsimile signals demodulated by the FAX demodulators 102. The selector controller 150 controls the selector 151 in response to the freeze-out fraction ratio fed from the freeze-out fraction ratio monitor 140 and the FAX transmission rates fed from the FAX transmission rate monitor 142. When the freeze-out fraction ratio is zero or less than a particular threshold value, the selector controller 150 controls the selector 151 such that the entire data stream output from the FAX-BANK assembler 120 is supplied to the bearer channel multiplexer 130. In contrast, when the freeze-out fraction ratio exceeds the particular threshold value, the selector controller 150 controls the selector 151 such that the volume of the FAX-BANK data stream supplied from the FAX-BANK assembler 120 to the bearer channel multiplexer 130 is reduced as the freeze-out fraction ratio increases, by selecting only data streams of the facsimile signals whose transmission rates are low, and by supplying the IP packet assembler 104 with the FAX-BANK data stream not supplied from the FAX-BANK assembler 120 to the bearer channel multiplexer 130.

As described above, the present embodiment 17 monitors the freeze-out fraction ratio of the speech signals and FAX transmission rates of the facsimile signals to be multiplexed onto the bearer line, and controls the data volume of the FAX-BANK signal to be multiplexed onto the bearer line in response to the freeze-out fraction ratio and FAX transmission rate. This makes it possible to limit the transmission rate of the facsimile signals to be multiplexed onto the bearer line by transmitting the facsimile signals beyond the limit in IP packets over the IP network. As the freeze-out fraction ratio increases, the transmission rate of the facsimile signals to be multiplexed onto the bearer line is further limited by increasing the facsimile signals to be transmitted in IP packets over the IP network. Thus, the highly efficient transmission of speech signals is implemented over the bearer line with maintaining speech in high quality.

### EMBODIMENT 18

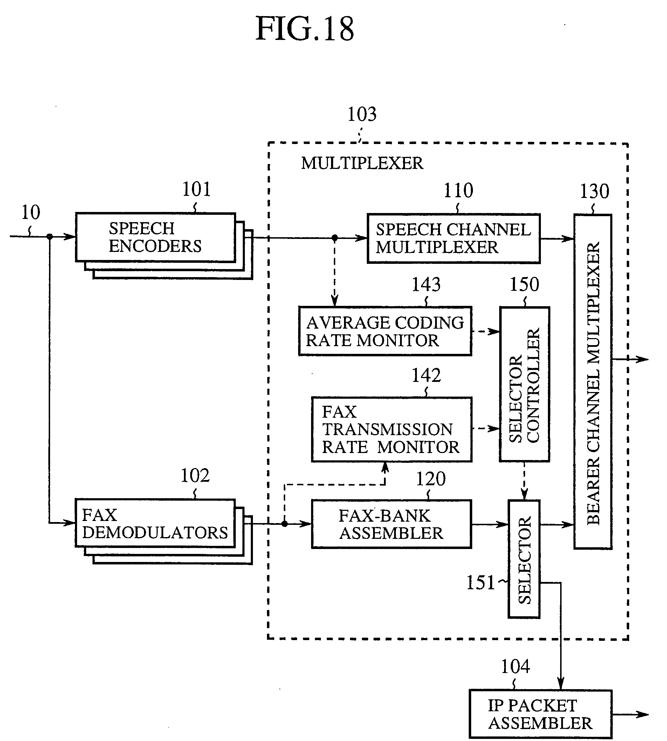

Fig. 18 is a block diagram showing a configuration of an embodiment 18 of the DCME in accordance with the present invention. In Fig. 18, the selector controller 150 controls the selector 151 in response to the signals fed from the average coding rate monitor 143 and FAX transmission rate monitor 142. The multiplexer 103 comprises the speech channel multiplexer 110, FAX-BANK assembler 120, average coding rate monitor 143, FAX transmission rate monitor 142, selector controller 150, selector 151, and bearer channel multiplexer 130.

Since the remaining configuration is the same as that of the embodiments 13 and 14, the description thereof is omitted here.

Next, the operation of the present embodiment 18 will be described.

The average coding rate monitor 143 monitors the average coding rate of the signals coded by the speech encoders 101. The coding scheme applied to the VBD signals by the speech encoders 101 is faster than the coding scheme applied to the speech signal. Thus, an increase in the average coding rate means an increase in the transmission ratio of the VBD signals. The FAX transmission rate monitor 142 monitors the transmission rates of the data streams of the facsimile signals demodulated by the FAX demodulators 102. The selector controller 150 controls the selector 151 in response to the average coding rate from the average coding rate monitor 143 and to the FAX transmission rate from the FAX transmission rate monitor 142. When the average coding rate is less than a particular threshold value, the selector controller 151 controls the selector 151 such that not only the lower- but also higher-rate facsimile signals are supplied from the FAX-BANK assembler 120 to the bearer channel multiplexer 130. In contrast, when the average coding rate exceeds the particular threshold value, the transmission rate of the FAX-BANK data stream of the facsimile signals supplied from the FAX-BANK assembler 120 to the bearer channel multiplexer 130 is decreased with an increase in the average coding rate by increasing the volume of the data stream supplied from the FAX-BANK assembler 120 to the IP packet assembler 104.

As described above, the present embodiment 18 monitors the average coding rate of the coded speech signals and the FAX transmission rates of the facsimile signals, and controls the data volume of the FAX-BANK signal to be multiplexed onto the bearer line in response to the average coding rate and FAX transmission rates. This makes it possible to limit the transmission rate of the facsimile signals to be multiplexed onto the bearer line by transmitting the facsimile signals beyond the limit in IP packets over the IP network. In addition, the transmission rate of the facsimile signals to be multiplexed onto the bearer line is further reduced with an increase in the average coding rate by increasing the facsimile signals to be transmitted in IP packets over the IP network. Thus, the highly efficient transmission of speech signals is implemented over the bearer line with maintaining speech in high quality.

### EMBODIMENT 19

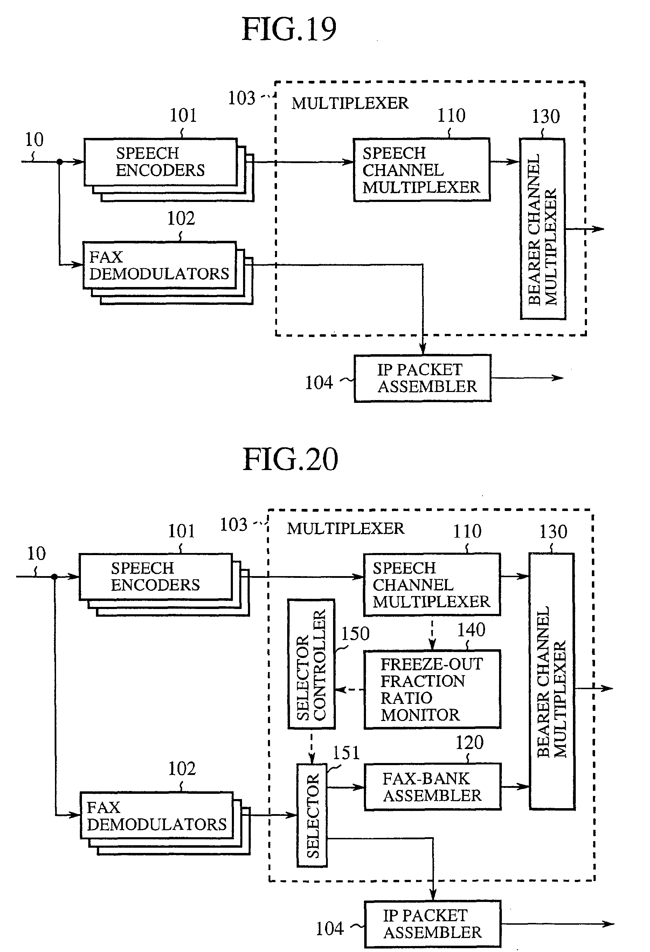

Fig. 19 is a block diagram showing a configuration of an embodiment 19 of the DCME in accordance with the present invention. In Fig. 19, the reference numeral 110 designates a speech channel multiplexer for multiplexing data streams from the speech encoders 101; and 130 designates a bearer channel multiplexer for multiplexing the data streams to be supplied to the bearer line.

The IP packet assembler 104 packetizes the data streams from the FAX demodulators 102 into IP packets, and supplies them to the IP network. The speech channel multiplexer 110 and bearer channel multiplexer 130 constitute the multiplexer 103.

Since the remaining configuration is the same as that of the embodiment 1, the description thereof is omitted here.

Next, the operation of the present embodiment 19 will be described.

The speech channel multiplexer 110 multiplexes the data streams fed from the speech encoders 101 to assemble them into a data stream by selecting the speech activities first. The bearer channel multiplexer 130 multiplexes the data stream from the speech channel multiplexer 110 onto the bearer line to be transmitted to the far end equipment. On the other hand, the IP packet assembler 104 assembles the demodulated facsimile data streams, which pass through the signal processing by the FAX demodulators 102, into IP packets to be transmitted over the IP network.

As described above, the present embodiment 19 transmits the data streams obtained by demodulating the facsimile signals in IP packets over the IP network. This makes it possible to implement the highly efficient transmission of speech signals over the bearer line with maintaining speech in high quality.

### EMBODIMENT 20

Fig. 20 is a block diagram showing a configuration of an embodiment 20 of the DCME in accordance with the present invention. In Fig. 20, the reference numeral 140 designates a freeze-out fraction ratio monitor for monitoring the freeze-out fraction ratio in the speech channel multiplexer 110; 150 designates a selector controller for controlling a selector 151 in response to the signal fed from the freeze-out fraction ratio monitor 140; and 151 designates the selector for distributing the data streams from the FAX demodulators 102 to the FAX-BANK assembler 120 and to the IP packet assembler 104 in response to the signal from the selector controller 150.

The IP packet assembler 104 packetizes the data streams fed from the FAX demodulators 102 via the selector 151 into IP packets to be output to the IP network, and the bearer channel multiplexer 130 multiplexes the data streams fed from the speech channel multiplexer 110 and from the FAX-BANK assembler 120 via the selector 151 to be output to the bearer line. The multiplexer 103 comprises the speech channel multiplexer 110, FAX-BANK assembler 120, freeze-out fraction ratio monitor 140, selector controller 150, selector 151 and bearer channel multiplexer 130.

Since the remaining configuration is the same as that of the embodiment 19, the description thereof is omitted here.

Next, the operation of the present embodiment 20 will be described.

The speech channel multiplexer 110 selects the speech activities first, and assembles them into the data stream. In this case, the freeze-out fraction ratio monitor 140 monitors the ratio of the speech activities not assembled into the data streams as the freeze-out fraction ratio. The selector controller 150 controls the selector 151 in response to the freeze-out fraction ratio. When the freeze-out fraction ratio is zero or less than a particular threshold value, the selector controller 150 controls the selector 151 such that all the data streams from the FAX demodulators 102 are supplied to the FAX-BANK assembler 120. In contrast, as the freeze-out fraction ratio increases, the selector controller 150 controls the selector 151 such that increasing data streams are supplied from the FAX demodulators 102 to the IP packet assembler 104 to reduce the data streams supplied from the FAX demodulators 102 to the FAX-BANK assembler 120.

As described above, the present embodiment 20 monitors the freeze-out fraction ratio of the speech signals to be multiplexed to the bearer line, and controls the data volume of the FAX-BANK signal to be multiplexed onto the bearer line in response to the freeze-out fraction ratio such that as the freeze-out fraction ratio increases, an increasing volume of the demodulated facsimile data streams is transmitted in IP packets over the IP network. This makes it possible to implement the highly efficient transmission of speech signals over the bearer line with maintaining speech in high quality.

### EMBODIMENT 21

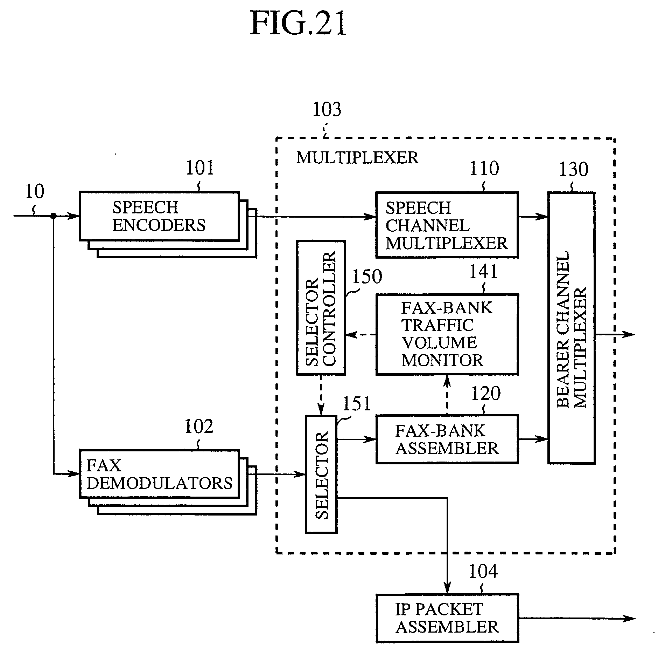

Fig. 21 is a block diagram showing a configuration of an embodiment 21 of the DCME in accordance with the present invention. In Fig. 21, the reference numeral 141 designates a FAX-BANK traffic volume monitor for monitoring the data volume of the FAX-BANK assembler 120.

The selector controller 150 controls the selector 151 in response to the signal fed from the FAX-BANK traffic volume monitor 141. The multiplexer 103 comprises the speech channel multiplexer 110, FAX-BANK assembler 120, FAX-BANK traffic volume monitor 141, selector controller 150, selector 151 and bearer channel multiplexer 130.

Since the remaining configuration is the same as that of the embodiment 20, the description thereof is omitted here.

Next, the operation of the present embodiment 21 will be described.

The FAX-BANK traffic volume monitor 141 monitors the data volume of the FAX-BANK assembled by the FAX-BANK assembler 120. The selector controller 150 controls the selector 151 in response to the FAX-BANK traffic volume fed from the FAX-BANK traffic volume monitor 141. When the FAX-BANK traffic volume is less than a particular threshold value, the selector controller 150 controls the selector 151 such that all the data streams from the FAX demodulators 102 are supplied to the FAX-BANK assembler 120. In contrast, when the FAX-BANK traffic volume exceeds a particular threshold value, the selector controller 150 controls the selector 151 such that it limits the FAX-BANK traffic volume to within the threshold value by increasing the data streams supplied from the FAX demodulators 102 to the IP packet assembler 104.

As described above, the present embodiment 21 monitors the FAX-BANK traffic volume to be multiplexed onto the bearer line, and controls the data volume of the FAX-BANK signal to be multiplexed onto the bearer line. This makes it possible to limit the FAX-BANK traffic volume sent over the bearer line by transmitting the demodulated facsimile data streams in IP packets over the IP network. Thus, the highly efficient transmission of speech signals is implemented over the bearer line with maintaining speech in high quality.

### EMBODIMENT 22

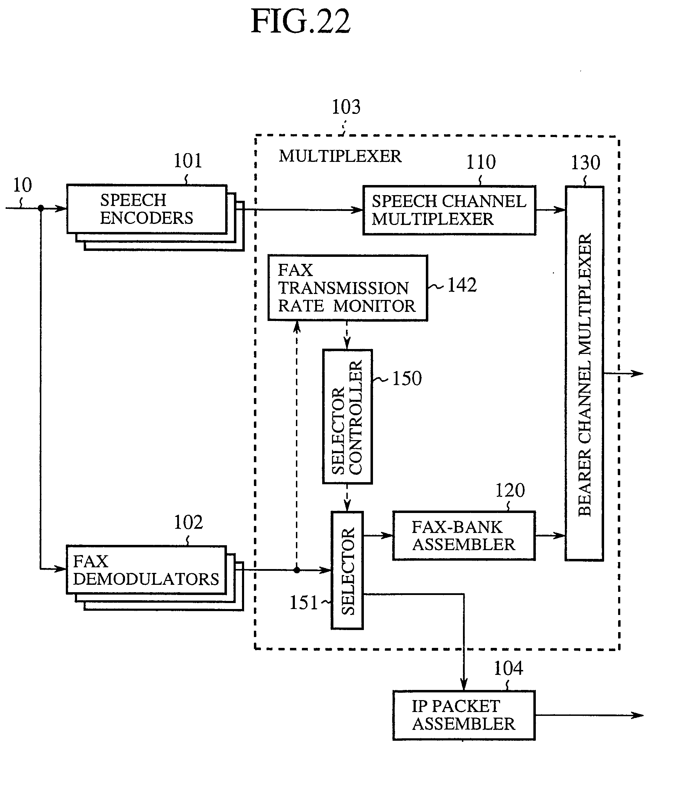

Fig. 22 is a block diagram showing a configuration of an embodiment 22 of the DCME in accordance with the present invention. In Fig. 22, the reference numeral 142 designates a FAX transmission rate monitor for monitoring the transmission rates of the facsimile signals output from the FAX demodulators 102.

The selector controller 150 controls the selector 151 in response to the signal fed from the FAX transmission rate monitor 142. The multiplexer 103 comprises the speech channel multiplexer 110, FAX-BANK assembler 120, FAX transmission rate monitor 142, selector controller 150, selector 151 and bearer channel multiplexer 130.

Since the remaining configuration is the same as that of the embodiment 20, the description thereof is omitted here.

Next, the operation of the present embodiment 22 will be described.

The FAX transmission rate monitor 142 monitors the transmission rates of the facsimile signals which are demodulated by the FAX demodulators 102 and supplied to the selector 151. The selector controller 150 controls the selector 151 in response to the FAX transmission rates fed from the FAX transmission rate monitor 142 such that the data streams from the FAX demodulators 102 with the FAX transmission rates lower than a particular threshold value are supplied to the FAX-BANK assembler 120, and that the data streams from the FAX demodulators 102 with the FAX transmission rates higher than the particular threshold value are supplied to the IP packet assembler 104.

As described above, the present embodiment 22 monitors the transmission rates of the facsimile signals, and limits the rate of the facsimile signals assembled into the FAX-BANK to be multiplexed onto the bearer line, thereby reducing the FAX-BANK traffic volume to be multiplexed onto the bearer line. This makes it possible to limit the FAX-BANK traffic volume on the bearer line, and to transmit large volume, high-speed facsimile data streams in IP packets over the IP network. Thus, the highly efficient transmission of speech signals is implemented over the bearer line with maintaining speech in high quality.

### EMBODIMENT 23

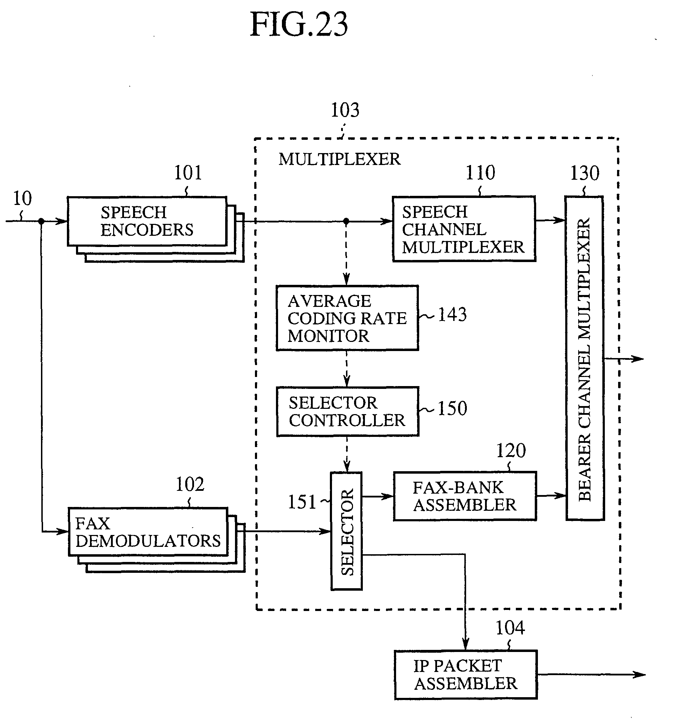

Fig. 23 is a block diagram showing a configuration of an embodiment 23 of the DCME in accordance with the present invention. In Fig. 23, the reference numeral designates 143 an average coding rate monitor for monitoring the average coding rate of the coded speech signals output from the speech encoders 101.

The selector controller 150 controls the selector 151 in response to the signal fed from the average coding rate monitor 143. The multiplexer 103 comprises the speech channel multiplexer 110, FAX-BANK assembler 120, average coding rate monitor 143, selector controller 150, selector 151 and bearer channel multiplexer 130.

Since the remaining configuration is the same as that of the embodiment 20, the description thereof is omitted here.

Next, the operation of the present embodiment 23 will be described.

The average coding rate monitor 143 monitors the average coding rate of the speech signals coded by the speech encoders 101. The selector controller 150 controls the selector 151 in response to the average coding rate fed from the average coding rate monitor 143. The coding scheme applied to the VBD signals in the speech encoders 101 is faster than that applied to the speech signal. Thus, an increase in the average coding rate means an increase in the transmission ratio of the VBD signals. Accordingly, when the average coding rate is lower than a particular threshold value, the selector controller 150 controls the selector 151 such that all the data streams from the FAX demodulators 102 are supplied to the FAX-BANK assembler 120. In contrast, as the average coding rate increases, the selector controller 150 controls the selector 151 such that increasing data streams are supplied from the FAX demodulators 102 to the IP packet assembler 104 to decrease the data streams supplied from the FAX demodulators 102 to the FAX-BANK assembler 120.

As described above, the present embodiment 23 monitors the average coding rate, and limits the data volume of the FAX-BANK to be multiplexed onto the bearer line in response to the average coding rate. This makes it possible to limit the FAX-BANK traffic volume on the bearer line by transmitting an increasing volume of the data streams of the FAX-BANK in IP packets over the IP network as the average coding rate increases, thereby implementing the highly efficient transmission of speech signals on the bearer line with maintaining speech in high quality.

### EMBODIMENT 24

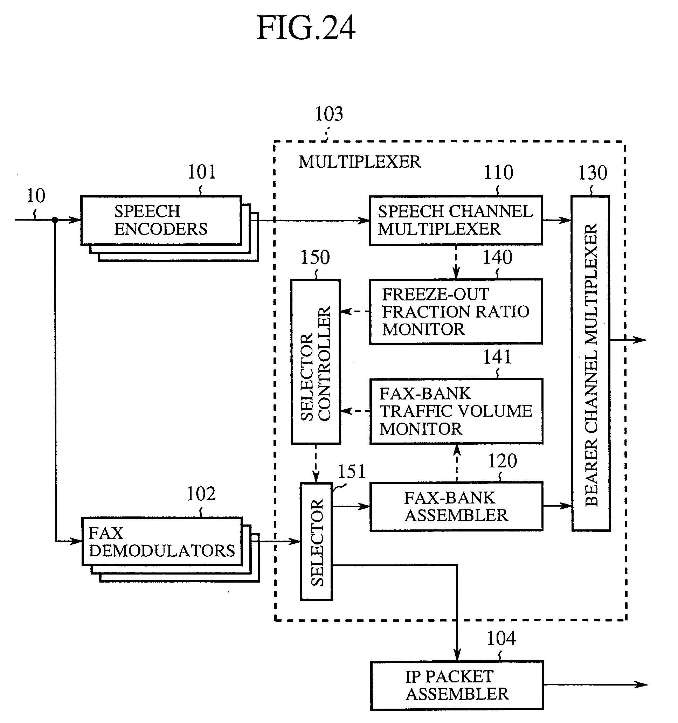

Fig. 24 is a block diagram showing a configuration of an embodiment 24 of the DCME in accordance with the present invention. In Fig. 24, the selector controller 150 controls the selector 151 in response to the signals fed from the freeze-out fraction ratio monitor 140 and FAX-BANK traffic volume monitor 141. The multiplexer 103 comprises the speech channel multiplexer 110, FAX-BANK assembler 120, freeze-out fraction ratio monitor 140, FAX-BANK traffic volume monitor 141, selector controller 150, selector 151 and bearer channel multiplexer 130.

Since the remaining configuration is the same as that of the embodiments 20 and 21, the description thereof is omitted here.

Next, the operation of the present embodiment 24 will be described.

The speech channel multiplexer 110 selects the speech activities first, and assembles them into a data stream. In this case, the freeze-out fraction ratio monitor 140 monitors the ratio of the speech activities not selected to be assembled into the data stream as the freeze-out fraction ratio. On the other hand, the FAX-BANK traffic volume monitor 141 monitors the data volume of the FAX-BANK assembled by the FAX-BANK assembler 120. The selector controller 150 controls the selector 151 in response to the freeze-out fraction ratio fed from the freeze-out fraction ratio monitor 140 and to the FAX-BANK traffic volume fed from the FAX-BANK traffic volume monitor 141. When the freeze-out fraction ratio is zero or less than a particular threshold value, the selector controller 150 controls the selector 151 in response to the FAX-BANK traffic volume such that the FAX-BANK traffic volume does not exceed the particular threshold value by limiting the data volume supplied from the FAX demodulators 102 to the FAX-BANK assembler 120, and by supplying the data streams beyond the limit from the FAX demodulators 102 to the IP packet assembler 104. In contrast, when the freeze-out fraction ratio exceeds the particular threshold value, the selector controller 150 controls the selector 151 such that increasing data streams are supplied from the FAX demodulators 102 to the IP packet assembler 104 as the freeze-out fraction ratio increases to decrease the data streams supplied from the FAX demodulators 102 to the FAX-BANK assembler 120.

As described above, the present embodiment 24 monitors the freeze-out fraction ratio of the speech signals to be multiplexed onto the bearer line and the FAX-BANK traffic volume to be multiplexed onto the bearer line, and controls the data volume of the FAX-BANK signal to be multiplexed onto the bearer line in response to the freeze-out fraction ratio and FAX-BANK traffic volume. This makes it possible to limit the FAX-BANK traffic volume to be multiplexed onto the bearer line by transmitting the facsimile signals beyond the limit in IP packets over the IP network. In addition, as the freeze-out fraction ratio increases, the FAX-BANK traffic volume to be multiplexed onto the bearer line is further limited by increasing the facsimile signals to be transmitted in IP packets over the IP network. Thus, the highly efficient transmission of speech signals is implemented over the bearer line with maintaining speech in high quality.

### EMBODIMENT 25

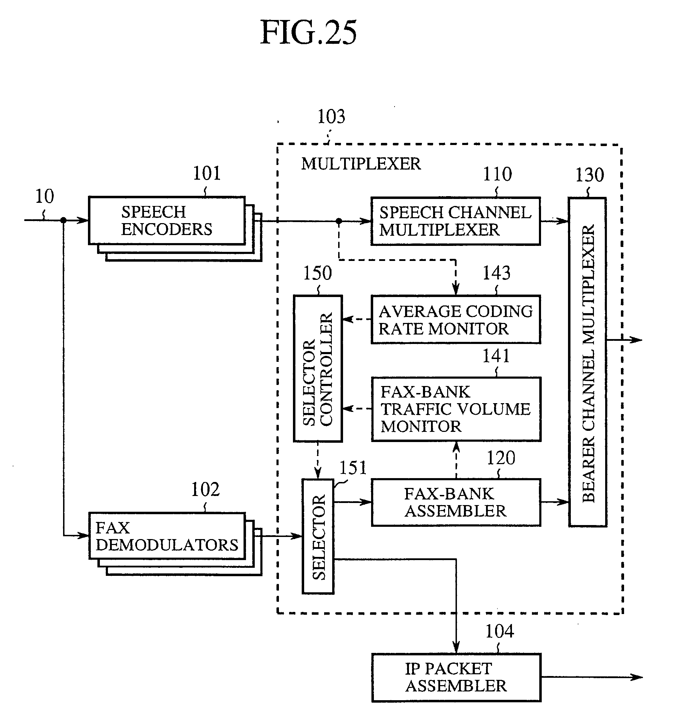

Fig. 25 is a block diagram showing a configuration of an embodiment 25 of the DCME in accordance with the present invention. In Fig. 25, the selector controller 150 controls the selector 151 in response to the signals fed from the average coding rate monitor 143 and FAX-BANK traffic volume monitor 141. The multiplexer 103 comprises the speech channel multiplexer 110, FAX-BANK assembler 120, average coding rate monitor 143, FAX-BANK traffic volume monitor 141, selector controller 150, selector 151 and bearer channel multiplexer 130.

Since the remaining configuration is the same as that of the embodiments 21 and 23, the description thereof is omitted here.

Next, the operation of the present embodiment 25 will be described.

The average coding rate monitor 143 monitors the average coding rate of the signals coded by the speech encoders 101. The coding scheme applied to the VBD signals in the speech encoders 101 is faster than that applied to the speech signal. Thus, an increase in the average coding rate means an increase in the transmission ratio of the VBD signals. The FAX-BANK traffic volume monitor 141 monitors the data volume of the FAX-BANK assembled by the FAX-BANK assembler 120. The selector controller 150 controls the selector 151 in response to the average coding rate fed from the average coding rate monitor 143 and to the FAX-BANK traffic volume fed from the FAX-BANK traffic volume monitor 141. When the average coding rate is lower than a particular threshold value, the selector controller 150 controls the selector 151 in response to the FAX-BANK traffic volume such that the FAX-BANK traffic volume does not exceed a particular threshold value by limiting the data volume supplied from the FAX demodulators 102 to the FAX-BANK assembler 120, and by supplying the data streams beyond the threshold value from the FAX demodulators 102 to the IP packet assembler 104. In contrast, when the average coding rate exceeds the particular threshold value, the selector controller 150 controls the selector 151 such that an increasing volume of the data streams is supplied from the FAX demodulators 102 to the IP packet assembler 104 as the average coding rate increases, thereby decreasing the volume of the data streams supplied from the FAX demodulators 102 to the FAX-BANK assembler 120.

As described above, the present embodiment 25 monitors the average coding rate of the coded speech signal and the FAX-BANK traffic volume to be multiplexed onto the bearer line, and controls the data volume of the FAX-BANK signal to be multiplexed onto the bearer line in response to the average coding rate and FAX-BANK traffic volume. This makes it possible to limit the FAX-BANK traffic volume to be multiplexed onto the bearer line by transmitting the facsimile signal beyond the limit in IP packets over the IP network. In addition, as the average coding rate increases, an increasing volume of the facsimile signals is transmitted in IP packets over the IP network to further limit the FAX-BANK traffic volume to be multiplexed onto the bearer line. Thus, the highly efficient transmission of speech signals is implemented over the bearer line with maintaining speech in high quality.

### EMBODIMENT 26

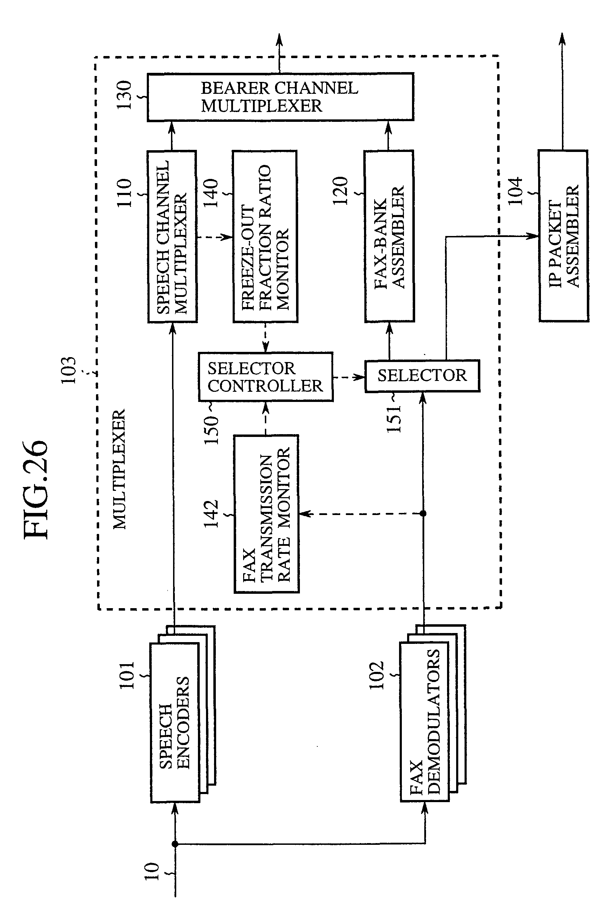

Fig. 26 is a block diagram showing a configuration of an embodiment 26 of the DCME in accordance with the present invention. In Fig. 26, the selector controller 150 controls the selector 151 in response to the signals fed from the freeze-out fraction ratio monitor 140 and FAX transmission rate monitor 142. The multiplexer 103 comprises the speech channel multiplexer 110, FAX-BANK assembler 120, freeze-out fraction ratio monitor 140, FAX transmission rate monitor 142, selector controller 150, selector 151 and bearer channel multiplexer 130.

Since the remaining configuration is the same as that of the embodiments 20 and 22, the description thereof is omitted here.

Next, the operation of the present embodiment 26 will be described.

The speech channel multiplexer 110 selects the speech activities first, and assemble a data stream. In this case, the freeze-out fraction ratio monitor 140 monitors the ratio of the speech activities that not selected to be assembled into the data stream as the freeze-out fraction ratio. On the other hand, the FAX transmission rate monitor 142 monitors the transmission rates of the data streams of the facsimile signals demodulated by the FAX demodulators 102. The selector controller 150 controls the selector 151 in response to the freeze-out fraction ratio fed from the freeze-out fraction ratio monitor 140 and the FAX transmission rate fed from the FAX transmission rate monitor 142. When the freeze-out fraction ratio is zero or less than a particular threshold value, the selector controller 150 controls the selector 151 such that both low- and high-speed facsimile signals are supplied to the FAX-BANK assembler 120. In contrast with this, when the freeze-out fraction ratio exceeds the particular threshold value, the selector controller 150 controls the selector 151 such that increasing data streams are supplied from the FAX demodulators 102 to the IP packet assembler 104 as the freeze-out fraction ratio increases, thereby decreasing the transmission rates of the facsimile signals supplied from the FAX demodulators 102 to the FAX-BANK assembler 120.

As described above, the present embodiment 26 monitors the freeze-out fraction ratio of the speech signals to be multiplexed onto the bearer line and the FAX transmission rate of the facsimile signal, and controls the data volume of the FAX-BANK signal to be multiplexed onto the bearer line in response to the freeze-out fraction ratio and FAX transmission rate. This makes it possible to limit the transmission rate of the facsimile signals to be multiplexed onto the bearer line by transmitting the facsimile signal beyond the limit in IP packets over the IP network. In addition, as the freeze-out fraction ratio increases, increasing facsimile signals are transmitted in IP packets over the IP network to further reduce the transmission rates of the facsimile signals to be multiplexed onto the bearer line. Thus, the highly efficient transmission of speech signals is achieved over the bearer line with maintaining speech in high quality.

### EMBODIMENT 27

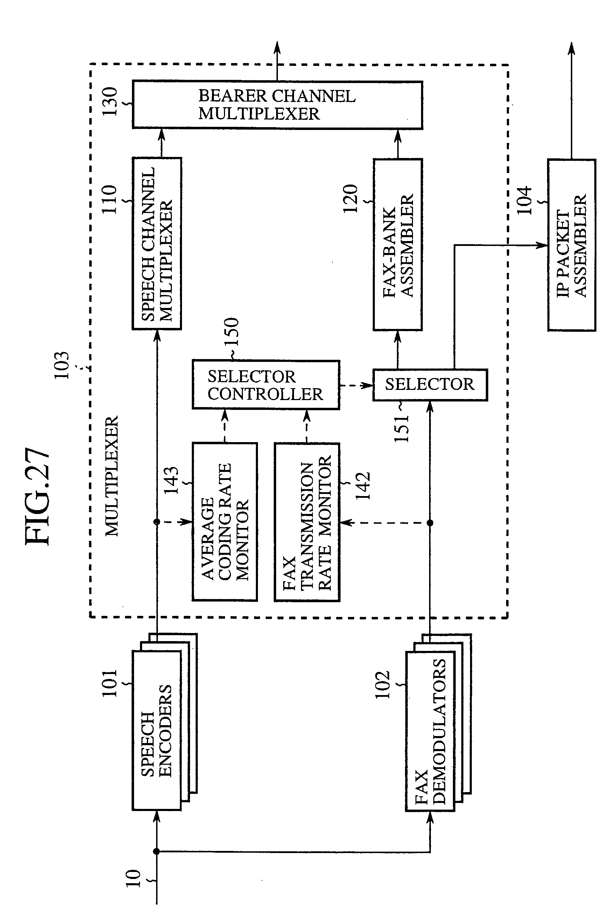

Fig. 27 is a block diagram showing a configuration of an embodiment 27 of the DCME in accordance with the present invention. In Fig. 27, the selector controller 150 controls the selector 151 in response to the signals fed from the average coding rate monitor 143 and FAX transmission rate monitor 142. The multiplexer 103 comprises the speech channel multiplexer 110, FAX-BANK assembler 120, average coding rate monitor 143, FAX transmission rate monitor 142, selector controller 150, selector 151 and bearer channel multiplexer 130.

Since the remaining configuration is the same as that of the embodiments 22 and 23, the description thereof is omitted here.

Next, the operation of the present embodiment 27 will be described.

The average coding rate monitor 143 monitors the average coding rate of the signals coded by the speech encoders 101. The coding scheme applied to the VBD signals in the speech encoders 101 is faster than that applied to the speech signal. Thus, an increase in the average coding rate means an increase in the transmission ratio of the VBD signals. The FAX transmission rate monitor 142 monitors the transmission rates of the data streams of the facsimile signals demodulated by the FAX demodulators 102. The selector controller 150 controls the selector 151 in response to the average coding rate fed from the average coding rate monitor 143 and to the FAX transmission rates fed from the FAX transmission rate monitor 142. When the average coding rate is lower than a particular threshold value, the selector controller 150 controls the selector 150 such that both low- and high-speed facsimile signals are supplied to the FAX-BANK assembler 120. In contrast, when the average coding rate exceeds the particular threshold value, the selector controller 150 controls the selector 151 such that increasing data streams are supplied from the FAX demodulators 102 to the IP packet assembler 104 as the average coding rate increases, thereby decreasing the transmission rate of the facsimile signals supplied from the FAX demodulators 102 to the FAX-BANK assembler 120.

As described above, the present embodiment 27 monitors the average coding rate of the coded speech signal and the FAX transmission rate of the facsimile signals, and limits the data volume of the FAX-BANK signal to be multiplexed onto the bearer line in response to the average coding rate and FAX transmission rate. This makes it possible to limit the transmission rate of the facsimile signals to be multiplexed onto the bearer line, by transmitting the facsimile signals beyond the limit in IP packets over the IP network. In addition, as the average coding rate increases, an increasing volume of the facsimile signals are transmitted in IP packets over the IP network to further limit the transmission rates of the facsimile signals to be multiplexed onto the bearer line. Thus, the highly efficient transmission of speech signals is achieved over the bearer line with maintaining speech in high quality.

### EMBODIMENT 28

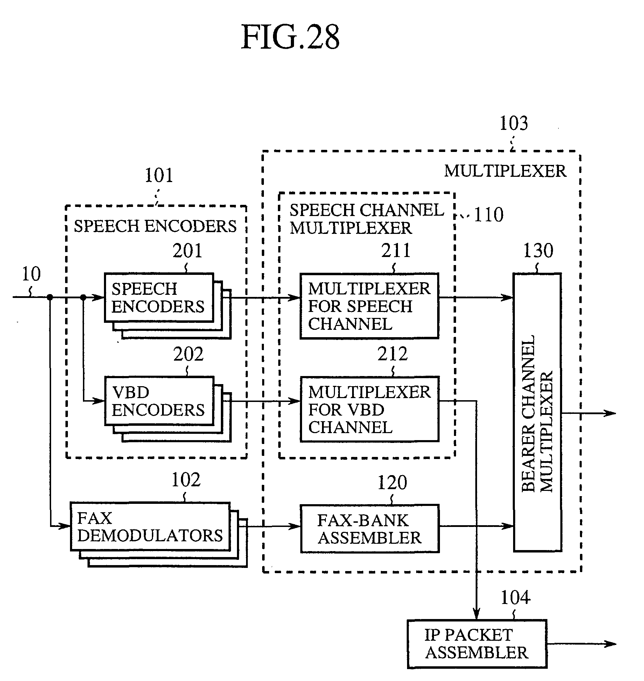

Fig. 28 is a block diagram showing a configuration of an embodiment 28 of the DCME in accordance with the present invention. In Fig. 28, the reference numeral 201 designates speech encoders for coding speech signals; 202 designate VBD encoders for coding VBD signals; 110 designates a speech channel multiplexer for multiplexing data streams output from the speech encoders 101; 211 designates a multiplexer for speech channel for multiplexing the data streams output from the speech encoders 201; 212 designates a multiplexer for VBD channel for multiplexing the data streams output from the VBD encoders 202; 120 designates a FAX-BANK assembler for assembling a FAX-BANK by multiplexing the data streams fed from the FAX demodulators 102; and 130 designates a bearer channel multiplexer for multiplexing the data streams fed from the multiplexer for speech channel 211 and FAX-BANK assembler 120 to be transmitted over a bearer line.

The IP packet assembler 104 packetizes the data streams fed from the multiplexer for VBD channel 212 into IP packets to be transmitted over the IP network. The speech encoders 101 comprises the speech encoders 201 and VBD encoders 202, the speech channel multiplexer 110 comprises the multiplexer for speech channel 211 and multiplexer for VBD channel 212, and the multiplexer 103 comprises the speech channel multiplexer 110, FAX-BANK assembler 120 and bearer channel multiplexer 130.

Since the remaining configuration is the same as that of the embodiment 1, the description thereof is omitted here.

Next, the operation of the present embodiment 28 will be described.

The speech signals, VBD signals and facsimile signals input via the signal line 10 are subject to the signal processings by the speech encoders 201, VBD encoders 202 and FAX demodulators 102, and converted into digital data streams. The coding scheme used by the VBD encoders 202 is faster than that used by the speech encoders 201. The multiplexer for speech channel 211 multiplexes the data streams from the speech encoders 201 to assemble them into a data stream. Likewise, the multiplexer for VBD channel 212 multiplexes the data streams from the VBD encoders 202 to assemble them into another data stream. The multiplexer for speech channel 211 and multiplexer for VBD channel 212 each select speech activities first to assemble the data stream. The FAX-BANK assembler 120 multiplexes the data streams from the FAX demodulators 102 to assemble them into a data stream. The bearer channel multiplexer 130 multiplexes the data stream fed from the multiplexer for speech channel 211 and the data stream fed from the FAX-BANK assembler 120 onto the bearer line to be transmitted to the far end equipment. On the other hand, the IP packet assembler 104 assembles the coded data stream, which consists of the VBD signals multiplexed by the multiplexer for VBD channel 212, into IP packets to be sent over the IP network.

As described above, the present embodiment 28 multiplexes the VBD signals, which differ from the speech signals in that it is difficult to obtain statistical multiplication effect by the silence elimination technique and hence require large transmission capacity because of the difficulty of applying the highly efficient coding technique, into a data stream to be transmitted in IP packets over the IP network. This makes it possible to implement the highly efficient transmission of speech signals over the bearer line with maintaining speech in high quality.

### EMBODIMENT 29

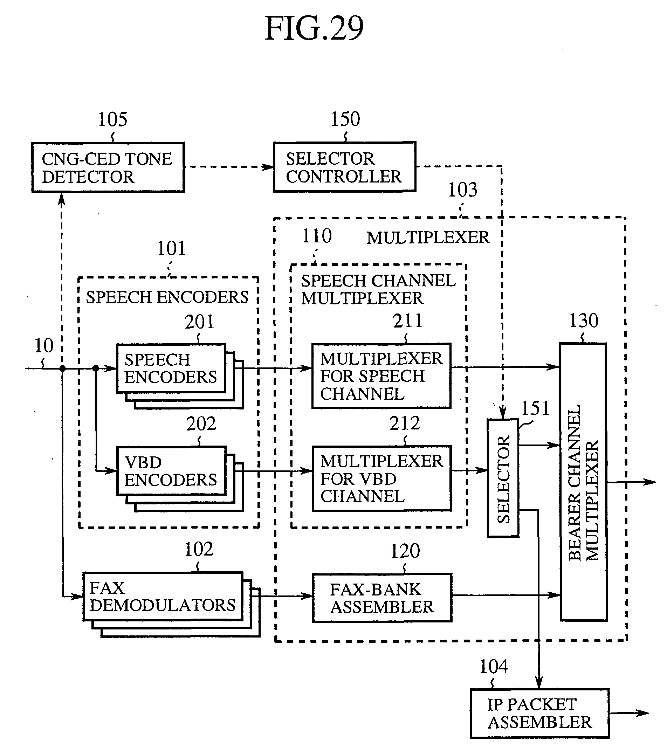

Fig. 29 is a block diagram showing a configuration of an embodiment 29 of the DCME in accordance with the present invention. In Fig. 29, the reference numeral 151 designates a selector for distributing the data fed from the multiplexer for VBD channel 212 to the bearer channel multiplexer 130 and IP packet assembler 104; 105 designates a CNG-CED tone detector for detecting a CED (Call Station Identification) signal and a CNG (Calling Tone) signal that appear at initial portions of the facsimile signal procedure; and 150 designates a selector controller for controlling the selector 151 in response to the signal fed from the CNG-CED tone detector 105.

The bearer channel multiplexer 130 multiplexes the data streams supplied from the multiplexer for speech channel 211, from the multiplexer for VBD channel 212 via the selector 151 and from the FAX-BANK assembler 120, and supplies the multiplexed data streams to the bearer line. The IP packet assembler 104 packetizes the data stream fed from multiplexer for VBD channel 212 via the selector 151 into IP packets, and supplies them to the IP network. The multiplexer 103 comprises the speech channel multiplexer 110, FAX-BANK assembler 120, bearer channel multiplexer 130 and selector 151.

Since the remaining configuration is the same as that of the embodiment 28, the description thereof is omitted here.

Next, the operation of the present embodiment 29 will be described.

The bearer channel multiplexer 130 multiplexes onto the bearer line the data stream from the multiplexer for speech channel 211, the data stream from the multiplexer for VBD channel 212 via the selector 151, and the data stream from the FAX-BANK assembler 120, thereby transmitting them to the far end equipment. The CNG-CED tone detector 105 monitors the incoming CNG signal or CED signal via the signal line 10. The selector controller 150 controls the selector 151 in response to the detection signal fed from the CNG-CED tone detector 105 such that the selector 151 supplies the IP packet assembler 104 with the data streams, from which the CNG signal or CED signal is detected, and which are assembled by the multiplexer for VBD channel 212 that multiplexes the VBD signals coded by the VBD encoders 202. The IP packet assembler 104 packetizes the data stream supplied from the multiplexer for VBD channel 212 via the selector 151 into the IP packet to be transmitted over the IP network.

As described above, the present embodiment 29 extracts data streams that are facsimile signals indeed but are not demodulated by the FAX demodulators 102 and transmitted as the VBD signals by detecting the CNG signal or CED signal from the VBD signals, which differ from the speech signals in that it is difficult to obtain statistical multiplication effect by the silence elimination technique and hence require large transmission capacity because of the difficulty of applying the highly efficient coding technique, and transmits the data streams in IP packets over the IP network. This makes it possible to implement the highly efficient transmission of speech signals over the bearer line with maintaining speech in high quality.

### EMBODIMENT 30

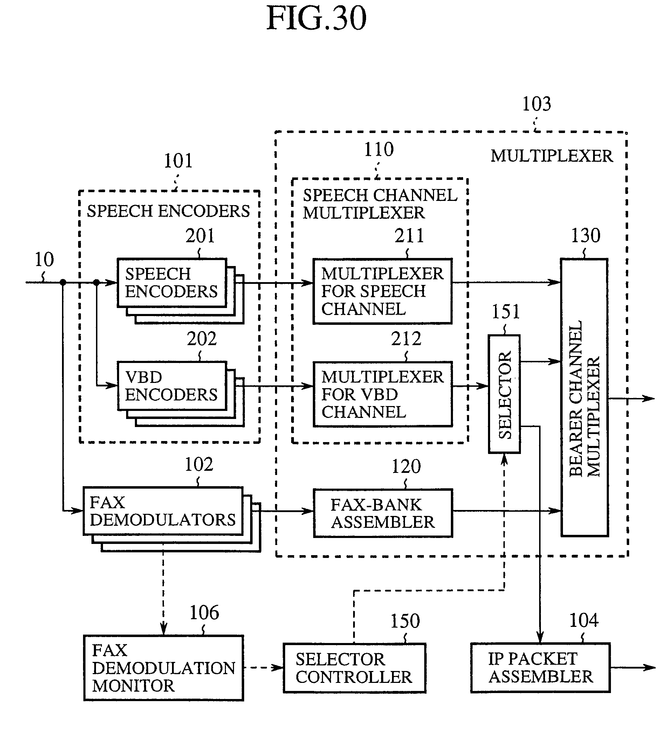

Fig. 30 is a block diagram showing a configuration of an embodiment 30 of the DCME in accordance with the present invention. In Fig. 30, the reference numeral 106 designates a FAX demodulation monitor for monitoring as to whether the demodulation transmission of the facsimile signals can be performed normally or not.

The selector controller 150 controls the selector 151 in response to the signal fed from the FAX demodulation monitor 106.

Since the remaining configuration is the same as that of the embodiment 29, the description thereof is omitted here.

Next, the operation of the present embodiment 30 will be described.

The FAX demodulation monitor 106 monitors as to whether the FAX demodulators 102 can properly perform the demodulation transmission processing or not. The selector controller 150 controls the selector 151 in response to the control signal fed from the FAX demodulation monitor 106 such that the selector 151 supplies the IP packet assembler 104 with the data streams which are not subjected to the normal FAX demodulation transmission, but are coded by the VBD encoders 202 and multiplexed by the multiplexer for VBD channel 212 as the VBD signals. The data stream supplied from the multiplexer for VBD channel 212 to the IP packet assembler 104 via the selector 151 is assembled into IP packets by the IP packet assembler 104 to be transmitted over the IP network.

As described above, the present embodiment 30 extracts data streams, which are facsimile signals indeed but are not demodulated by the FAX demodulators 102 and are transmitted as the VBD signals, by making a decision as to whether the FAX demodulation can be performed properly for the VBD signals, which differ from the speech signals in that it is difficult to obtain statistical multiplication effect by the silence elimination technique, and hence require large transmission capacity because of the difficulty of applying the highly efficient coding technique, and transmits the data streams in IP packets over the IP network. This makes it possible to implement the highly efficient transmission of speech signals over the bearer line with maintaining speech in high quality.

### EMBODIMENT 31

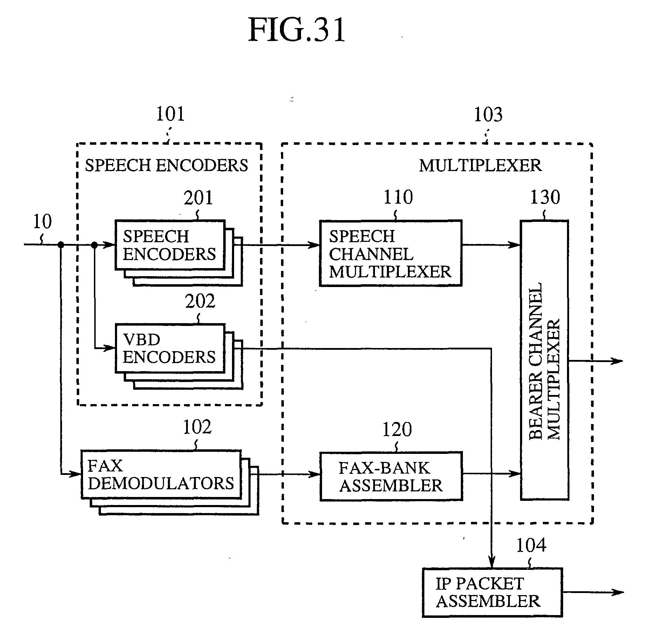

Fig. 31 is a block diagram showing a configuration of an embodiment 31 of the DCME in accordance with the present invention. In Fig. 31, the reference numeral 201 designates speech encoders each for carrying out coding processing of a speech signal; 202 designates VBD encoders each for carrying out coding processing of a VBD signal; 110 designates a speech channel multiplexer for multiplexing data streams output from the speech encoders 101; 120 designates a FAX-BANK assembler for assembling a FAX-BANK by multiplexing data streams output from the FAX demodulators 102; and 130 designates a bearer channel multiplexer for multiplexing data streams fed from the speech channel multiplexer 110 and FAX-BANK assembler 120, and transmits them over the bearer line.

The IP packet assembler 104 packetizes the data streams from the VBD encoders 202 into IP packets to be transmitted over the IP network. The speech encoders 101 comprise the speech encoders 201 and VBD encoders 202, and the multiplexer 103 comprises the speech channel multiplexer 110, FAX-BANK assembler 120 and bearer channel multiplexer 130.

Since the remaining configuration is the same as that of the embodiment 1, the description thereof is omitted here.

Next, the operation of the present embodiment 31 will be described.

The speech signals, VBD signals and facsimile signals input through the signal line 10 undergo signal processings by the speech encoders 201, VBD encoders 202 and FAX demodulators 102 to be converted into the digital data streams. The coding scheme employed by the VBD encoders 202 is faster than that employed by the speech encoders 201. The speech channel multiplexer 110 multiplexes the data streams fed from the speech encoders 201 into a data stream. The speech channel multiplexer 110 selects speech activities first, and assembles them into a data stream. The FAX-BANK assembler 120 multiplexes the data streams from the FAX demodulators 102 into another data stream. The bearer channel multiplexer 130 multiplexes the data stream from the speech channel multiplexer 110 and the data stream from the FAX-BANK assembler 120 onto the bearer line to be transmitted to the far end equipment. The VBD encoders 202 carry out signal processings and output coded VBD signals in the form of data streams, and the IP packet assembler 104 packetizes the coded VBD signals into IP packets to be transmitted over the IP network.

As described above, the present embodiment 31 packetizes the coded data streams of the VBD signals into the IP packets, and transmits them through the IP network, wherein the VBD signals differ from the speech signals in that it is difficult for the silence elimination technique to bring about the statistical multiplication effect with them and hence they require large transmission capacity. Thus, the highly efficient transmission of speech signals is implemented over the bearer line with maintaining speech in high quality.

### EMBODIMENT 32

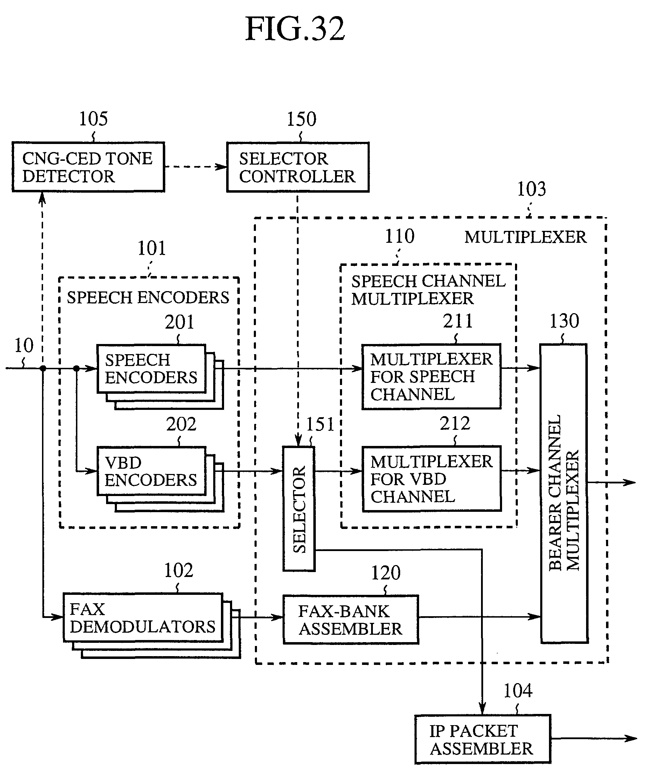

Fig. 32 is a block diagram showing a configuration of an embodiment 32 of the DCME in accordance with the present invention. In Fig. 32, the reference numeral 151 designates a selector for distributing the data from the VBD encoders 202 to the multiplexer for VBD channel 212 and IP packet assembler 104; 105 designates a CNG-CED tone detector for detecting the CED signal or CNG signal appearing at the initial portion of the facsimile signal procedure; 150 designates a selector controller for controlling the selector 151 in response to the signal fed from the CNG-CED tone detector 105; 211 designates a multiplexer for speech channel for multiplexing data streams output from the speech encoders 201; and 212 designates a multiplexer for VBD channel for multiplexing data streams supplied from the VBD encoders 202 via the selector 151.

The bearer channel multiplexer 130 multiplexes the data streams fed from the multiplexer for speech channel 211, from the multiplexer for VBD channel 212 via the selector 151, and from the FAX-BANK assembler 120, and outputs the multiplexed data streams to the bearer line. On the other hand, the IP packet assembler 104 packetizes the data streams fed from the VBD encoders 202 via the selector 151 into IP packets to be transmitted over the IP network. The speech channel multiplexer 110 comprises the multiplexer for speech channel 211 and multiplexer for VBD channel 212. The multiplexer 103 comprises the speech channel multiplexer 110, FAX-BANK assembler 120, bearer channel multiplexer 130 and selector 151.

Since the remaining configuration is the same as that of the embodiment 31, the description thereof is omitted here.

Next, the operation of the present embodiment 32 will be described.

The multiplexer for speech channel 211 multiplexes the data streams from the speech encoders 201 and assembles them into a data stream. Likewise, the multiplexer for VBD channel 212 multiplexes the data streams fed from the VBD encoders 202 via the selector 151 and assembles them into another data stream. The multiplexer for speech channel 211 and multiplexer for VBD channel 212 each select speech activities first, and assembles them into the data streams. The bearer channel multiplexer 130 multiplexes the data stream from the multiplexer for speech channel 211, the data stream from the multiplexer for VBD channel 212 and the data stream from the FAX-BANK assembler 120 onto the bearer line to be transmitted to the far end equipment. The CNG-CED tone detector 105 detects the CNG signal or CED signal in the signals input through the signal line 10. The selector controller 150 controls the selector 151 in response to the detection signal fed from the CNG-CED tone detector such that the coded data streams, in which the CNG signal or CED signal is detected and which are coded by the VBD encoders 202 as the VBD signals, are supplied to the IP packet assembler 104. The IP packet assembler 104 packetizes the data streams supplied from the VBD encoders 202 via the selector 151 into the IP packets to be transmitted over the IP network.

As described above, the present embodiment 32 extracts as the VBD signals the data streams that are facsimile signals indeed but are not demodulated by the FAX demodulators 102, and transmits them in the IP packets over the IP network in response to the CNG signal or CED signal detected from the VBD signals which differ from the speech signals in that it is difficult for the silence elimination technique to bring about the statistical multiplication effect with them, and hence they require large transmission capacity. This makes it possible to implement the highly efficient transmission of speech signals over the bearer line with maintaining speech in high quality.

### EMBODIMENT 33

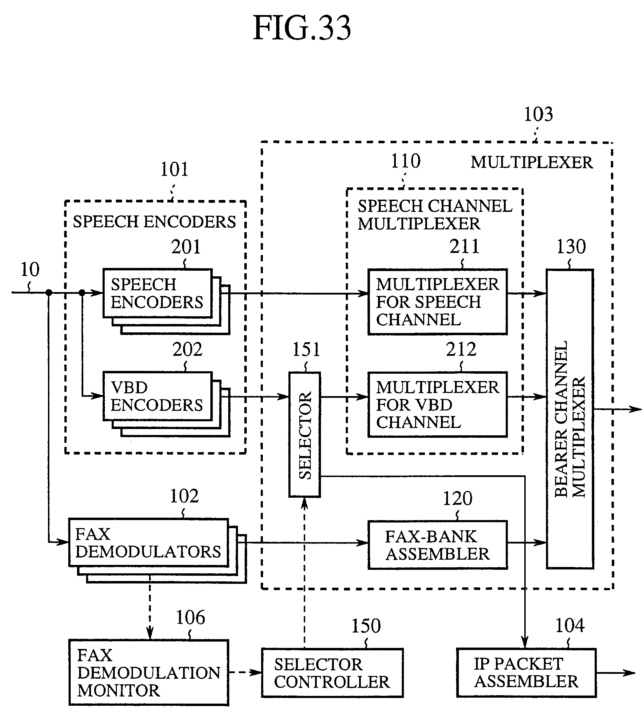

Fig. 33 is a block diagram showing a configuration of an embodiment 33 of the DCME in accordance with the present invention. In Fig. 33, the reference numeral 106 designates a FAX demodulation monitor for monitoring as to whether the demodulation transmission of the facsimile signals can be carried out normally.

The selector controller 150 controls the selector 151 in response to the signal fed from the FAX demodulation monitor 106.

Since the remaining configuration is the same as that of the embodiment 32, the description thereof is omitted here.

Next, the operation of the present embodiment 33 will be described.

The FAX demodulation monitor 106 monitors as to whether the FAX demodulators 102 can perform the demodulation transmission processing of the signals normally. The selector controller 150 controls the selector 151 in response to the control signal from the FAX demodulation monitor 106 such that the data streams, which do not undergo the normal FAX demodulation transmission, but are coded by the VBD encoders 202 as the VBD signals, are supplied from the VBD encoders to the IP packet assembler 104 via the selector 151. The IP packet assembler 104 packetizes the data streams into IP packets to be transmitted over the IP network.

As described above, the present embodiment 33 extracts as the data streams that are facsimile signals indeed but are not demodulated by the FAX demodulators 102 and that are coded and transmitted as the VBD signals, and transmits them in the IP packets over the IP network, by making a decision as to whether the FAX demodulation can be performed normally for the VBD signals which differ from the speech signals in that it is difficult for the silence elimination technique to bring about the statistical multiplication effect with them, and hence they require large transmission capacity. This makes it possible to implement the highly efficient transmission of speech signals over the bearer line with maintaining speech in high quality.

Finally, any one of the configurations of the foregoing embodiments 2-27 can be combined with any one of the configurations of the embodiments 28-33, offering advantages corresponding to the features of the individual configurations combined.

## Claims

1. Digital circuit multiplication equipment (DCME) comprising:
a speech signal processor (101) for performing signal processings of input speech signals;
a FAX demodulation transmission processor (102) for performing demodulation transmission processings of input facsimile signals;
multiplexing means (103) for multiplexing part of received signals from said speech signal processor and from said FAX demodulation transmission processor, for supplying a multiplexed signal to a bearer line, and for outputting remaining part of the received signals; and
an IP packet assembler (104) for packetizing the remaining part of the received signals supplied from said multiplexing means into IP packets to be output to an IP network.

2. The DCME according to claim 1, wherein said multiplexing means (103) comprises:
a speech channel multiplexer (110) for multiplexing outputs from said speech signal processor; and
a bearer channel multiplexer (130) for multiplexing signals from said speech channel multiplexer, and for supplying a multiplexed signal to the bearer line, and
wherein said IP packet assembler (104) packetizes signals output from said FAX demodulation transmission processor into IP packets to be output to the IP network.

3. The DCME according to claim 1, wherein said multiplexing means (103) comprises:
a speech channel multiplexer (110) for multiplexing outputs from said speech signal processor;
a FAX-BANK assembler (120) for assembling a FAX-BANK by multiplexing outputs from said FAX demodulation transmission processor; and
a bearer channel multiplexer (130) for multiplexing signals from said speech channel multiplexer, and for supplying a multiplexed signal to the bearer line, and
wherein said IP packet assembler (104) packetizes the FAX-BANK output from said FAX-BANK assembler into IP packets to be output to the IP network.

4. The DCME according to claim 1, wherein said multiplexing means (103) comprises:
a speech channel multiplexer (110) for multiplexing outputs from said speech signal processor;
a selector (151) for distributing signals supplied from said FAX demodulation transmission processor;
a first FAX-BANK assembler (120) for assembling a FAX-BANK by multiplexing a first portion of the signals distributed by said selector;
a second FAX-BANK assembler (121) for assembling a FAX-BANK by multiplexing a second portion of the signals distributed by said selector;
a bearer channel multiplexer (130) for multiplexing a signal output from said speech channel multiplexer with the FAX-BANK output from said first FAX-BANK assembler, and for supplying a multiplexed signal to the bearer line;
equipment load monitoring means (140, 141, 142 or 143) for monitoring an intra-equipment load state; and
a selector controller (150) for controlling said selector in response to at least one signal fed from said equipment load monitoring means, and
wherein said IP packet assembler (104) packetizes the FAX-BANK output from said second FAX-BANK assembler into IP packets to be supplied to the IP network.

5. The DCME according to claim 1, wherein said multiplexing means (103) comprises:
a speech channel multiplexer (110) for multiplexing outputs of said speech signal processor;
a FAX-BANK assembler (120) for assembling a FAX-BANK by multiplexing outputs of said FAX demodulation transmission processor;
a selector (151) for distributing the FAX-BANK supplied from said FAX-BANK assembler;
a bearer channel multiplexer (130) for multiplexing a signal output from said speech channel multiplexer with a first portion of the FAX-BANK distributed by said selector, and for supplying a multiplexed signal to the bearer line;
equipment load monitoring means (140, 141, 142 or 143) for monitoring an intra-equipment load state; and
a selector controller (150) for controlling said selector in response to at least one signal fed from said equipment load monitoring means, and
wherein said IP packet assembler (104) packetizes a second portion of the FAX-BANK distributed by said selector into IP packets to be supplied to the IP network.

6. The DCME according to claim 1, wherein said multiplexing means (103) comprises:
a speech channel multiplexer (110) for multiplexing outputs of said speech signal processor;
a selector (151) for distributing signals supplied from said FAX demodulation transmission processor;
a FAX-BANK assembler (120) for assembling a FAX-BANK by multiplexing a first portion of signals distributed by said selector;
a bearer channel multiplexer (130) for multiplexing a signal output from said speech channel multiplexer with the FAX-BANK output from said FAX-BANK assembler, and for supplying a multiplexed signal to the bearer line;
equipment load monitoring means (140, 141, 142 or 143) for monitoring an intra-equipment load state; and
a selector controller (150) for controlling said selector in response to a signal fed from said equipment load monitoring means, and
wherein said IP packet assembler (104) packetizes a second portion of the signals distributed by said selector into IP packets to be supplied to the IP network.

7. The DCME according to claim 4, wherein said equipment load monitoring means consists of one of a freeze-out fraction ratio monitor (140), a FAX-BANK traffic volume monitor (141), a FAX transmission rate monitor (142) and an average coding rate monitor (143), wherein said freeze-out fraction ratio monitor monitors a freeze-out fraction ratio of said speech channel multiplexer, said FAX-BANK traffic volume monitor monitors a FAX-BANK traffic volume of one of said FAX-BANK assembler and first FAX-BANK assembler, said FAX transmission rate monitor monitors a FAX transmission rate of said FAX demodulation transmission processor, and said average coding rate monitor monitors an average coding rate of said speech signal processor.

8. The DCME according to claim 5, wherein said equipment load monitoring means consists of one of a freeze-out fraction ratio monitor (140), a FAX-BANK traffic volume monitor (141), a FAX transmission rate monitor (142) and an average coding rate monitor (143), wherein said freeze-out fraction ratio monitor monitors a freeze-out fraction ratio of said speech channel multiplexer, said FAX-BANK traffic volume monitor monitors a FAX-BANK traffic volume of one of said FAX-BANK assembler and first FAX-BANK assembler, said FAX transmission rate monitor monitors a FAX transmission rate of said FAX demodulation transmission processor, and said average coding rate monitor monitors an average coding rate of said speech signal processor.

9. The DCME according to claim 6, wherein said equipment load monitoring means consists of one of a freeze-out fraction ratio monitor (140), a FAX-BANK traffic volume monitor (141), a FAX transmission rate monitor (142) and an average coding rate monitor (143), wherein said freeze-out fraction ratio monitor monitors a freeze-out fraction ratio of said speech channel multiplexer, said FAX-BANK traffic volume monitor monitors a FAX-BANK traffic volume of one of said FAX-BANK assembler and first FAX-BANK assembler, said FAX transmission rate monitor monitors a FAX transmission rate of said FAX demodulation transmission processor, and said average coding rate monitor monitors an average coding rate of said speech signal processor.

10. The DCME according to claim 4, wherein said equipment load monitoring means comprises at least two monitors selected from a group consisting of a freeze-out fraction ratio monitor (140), a FAX-BANK traffic volume monitor (141), a FAX transmission rate monitor (142) and an average coding rate monitor (143), wherein said freeze-out fraction ratio monitor monitors a freeze-out fraction ratio of said speech channel multiplexer, said FAX-BANK traffic volume monitor monitors a FAX-BANK traffic volume of one of said FAX-BANK assembler and first FAX-BANK assembler, said FAX transmission rate monitor monitors a FAX transmission rate of said FAX demodulation transmission processor, and said average coding rate monitor monitors an average coding rate of said speech signal processor, and wherein said selector controller (150) controls said selector in response to signals supplied from said at least two monitors.

11. The DCME according to claim 5, wherein said equipment load monitoring means comprises at least two monitors selected from a group consisting of a freeze-out fraction ratio monitor (140), a FAX-BANK traffic volume monitor (141), a FAX transmission rate monitor (142) and an average coding rate monitor (143), wherein said freeze-out fraction ratio monitor monitors a freeze-out fraction ratio of said speech channel multiplexer, said FAX-BANK traffic volume monitor monitors a FAX-BANK traffic volume of one of said FAX-BANK assembler and first FAX-BANK assembler, said FAX transmission rate monitor monitors a FAX transmission rate of said FAX demodulation transmission processor, and said average coding rate monitor monitors an average coding rate of said speech signal processor, and wherein said selector controller (150) controls said selector in response to signals supplied from said at least two monitors.

12. The DCME according to claim 6, wherein said equipment load monitoring means comprises at least two monitors selected from a group consisting of a freeze-out fraction ratio monitor (140), a FAX-BANK traffic volume monitor (141), a FAX transmission rate monitor (142) and an average coding rate monitor (143), wherein said freeze-out fraction ratio monitor monitors a freeze-out fraction ratio of said speech channel multiplexer, said FAX-BANK traffic volume monitor monitors a FAX-BANK traffic volume of one of said FAX-BANK assembler and first FAX-BANK assembler, said FAX transmission rate monitor monitors a FAX transmission rate of said FAX demodulation transmission processor, and said average coding rate monitor monitors an average coding rate of said speech signal processor, and wherein said selector controller (150) controls said selector in response to signals supplied from said at least two monitors.

13. The DCME according to claim 1, wherein said speech signal processor (101) comprises speech encoders (201) for encoding input speech signals, and VBD encoders (202) for encoding input VBD signals, wherein said multiplexing means (103) comprises a speech channel multiplexer (110) for multiplexing signals supplied from said speech encoders, a FAX-BANK assembler (120) for assembling a FAX-BANK by multiplexing signals supplied from said FAX demodulation transmission processor, and a bearer channel multiplexer (130) for multiplexing a signal from said speech channel multiplexer with the FAX-BANK from said FAX-BANK assembler, and for supplying a multiplexed signal to the bearer line, and wherein said IP packet assembler (104) packetizes signals from said VBD encoders into IP packets to be output to the IP network.

14. The DCME according to claim 13, wherein said speech channel multiplexer (110) comprises a multiplexer for speech channel (211) for multiplexing signals supplied from said speech encoders, and a multiplexer for VBD channel (212) for multiplexing signals supplied from said VBD encoders, and wherein said IP packet assembler (104) packetizes a signal output from said multiplexer for VBD channel into IP packets to be output to the IP network.

15. The DCME according to claim 14, wherein said multiplexing means (103) further comprises a selector (151) for distributing signals output from said multiplexer for VBD channel, wherein said DCME further comprises a CNG-CED tone detector (105) for detecting one of a CNG signal and a CED signal in facsimile protocol, and a selector controller (150) for controlling said selector in response to a signal supplied from said CNG-CED tone detector, wherein said bearer channel multiplexer (130) multiplexes a signal output from said multiplexer for speech channel (211), a first portion of the signals distributed by said selector and the FAX-BANK output from said FAX-BANK assembler (120), and outputs a multiplexed signal to the bearer line, and wherein said packet assembler (104) packetizes a second portion of the signals distributed by said selector into IP packets to be supplied to said IP network.

16. The DCME according to claim 14, wherein said multiplexing means (103) further comprises a selector (151) for distributing signals output from said multiplexer for VBD channel (212), wherein said DCME further comprises a FAX demodulation monitor (106) for monitoring as to whether facsimile signals can be normally processed by said FAX demodulation transmission processor (102), and a selector controller (150) for controlling said selector in response to a signal supplied from said FAX demodulation monitor, wherein said bearer channel multiplexer (130) multiplexes a signal output from said multiplexer for speech channel (211), a first portion of signals distributed by said selector and the FAX-BANK output from said FAX-BANK assembler (120), and outputs a multiplexed signal to the bearer line, and wherein said packet assembler (104) packetizes a second portion of signals distributed by said selector into IP packets to be supplied to said IP network.

17. The DCME according to claim 14, wherein said multiplexing means (103) further comprises a selector (151) for distributing signals from said VBD encoders (202) to said multiplexer for VBD channel (212) and to said IP packet assembler (104), wherein said DCME further comprises a CNG-CED tone detector (105) for detecting one of a CNG signal and a CED signal in facsimile protocol, and a selector controller (150) for controlling said selector in response to a signal supplied from said CNG-CED tone detector, wherein said bearer channel multiplexer (130) multiplexes a signal output from said multiplexer for speech channel (211), a signal output from said multiplexer for VBD channel (212) and the FAX-BANK output from said FAX-BANK assembler (120), and outputs a multiplexed signal to the bearer line, and wherein said packet assembler (104) packetizes the signal distributed by said selector into IP packets to be supplied to said IP network.

18. The DCME according to claim 14, wherein said multiplexing means (103) further comprises a selector (151) for distributing signals from said VBD encoders (202) to said multiplexer for VBD channel (212) and to said IP packet assembler (104), wherein said DCME further comprises a FAX demodulation monitor (106) for monitoring as to whether facsimile signals can be normally processed by said FAX demodulation transmission processor (102), and a selector controller (150) for controlling said selector in response to a signal supplied from said FAX demodulation monitor, wherein said bearer channel multiplexer (130) multiplexes a signal output from said multiplexer for speech channel (211), a signal output from said multiplexer for VBD channel (212) and the FAX-BANK output from said FAX-BANK assembler (120), and outputs a multiplexed signal to the bearer line, and wherein said packet assembler (104) packetizes the signal distributed by said selector into IP packets to be supplied to said IP network.
